(19) Europäisches Patentamt
European Patent Office
Office européen des brevets

(11) Veröffentlichungsnummer: **0 596 325 A1**

(12) # EUROPÄISCHE PATENTANMELDUNG

(21) Anmeldenummer: **93116954.4**

(51) Int. Cl.5: **G02F 1/35**

(22) Anmeldetag: **20.10.93**

(30) Priorität: **27.10.92 DE 4236243**

(43) Veröffentlichungstag der Anmeldung:
**11.05.94 Patentblatt 94/19**

(84) Benannte Vertragsstaaten:
**BE CH DE DK FR GB GR IE IT LI NL SE**

(71) Anmelder: **HOECHST AKTIENGESELLSCHAFT**
**Brüningstrasse 50**
**D-65929 Frankfurt am Main(DE)**

(72) Erfinder: **Cabrera, Ivan, Dr.**
**Mühlweg 14**
**D-63303 Dreieichenhain(DE)**
Erfinder: **Falk, Uwe, Dr.**
**Breitenbachstrasse 67**
**D-65187 Wiesbaden(DE)**
Erfinder: **Hickel, Werner, Dr.**
**Pfalzgrafenstrasse 65**
**D-67061 Ludwigshafen(DE)**
Erfinder: **Lupo, Donald, Dr.**
**Am Holderbusch 28**
**D-65817 Eppstein/Ts.(DE)**
Erfinder: **Mayer, Andreas, Dr.**
**Rosenpark 32**
**D-65795 Hattersheim am Main(DE)**
Erfinder: **Pawlowski, Georg, Dr.**
**Fritz-Kalle-Strasse 34**
**D-65187 Wiesbaden(DE)**
Erfinder: **Scheunemann, Ude, Dr.**
**Feldbergstrasse 12**
**D-65835 Liederbach(DE)**

(54) **Optisches Bauelement auf Basis von Langmuir-Blodgett-Schichten.**

(57) Ein optisches Bauelement (100), enthält ein für elektromagnetische Strahlung durchlässiges polymeres Medium mit einer Suszeptibilität zweiter Ordnung von mindenstens $10^{-9}$ elektrostatischen Einheiten, wobei dieses polymere Medium Verbindungen mit polar ausgerichteten, nichtzentrosymmetrischen molekularen Dipolen enthält, die als Strukturelement, einen Elektronenakzeptor aufweisen, der über ein konjugiertes $\pi$-Elektronensystem an einen Elektrodendonor gebunden ist, wodurch eine Oszillation des molaren Dipols zwischen einem Grundzustand mit einem ersten Dipolmoment und einem elektronisch angeregten Zustand mit einem zweiten, vom ersten verschiedenen Dipolmoment, möglich ist, und ist dadurch gekennzeichnet, daß das polymere Medium alternierend aus mindestens je einem Langmuir-Blodgett-Film mindestens zweier unterschiedlicher, nicht ionischer, nichtlineare optische Eigenschaften aufweisender Polymere besteht (103).

Das erfindungsgemäße optische Bauelement zeigt neben einer hohen mechanischen und chemischen Stabilität ausgezeichnete nichtlineare optische Eigenschaften, z.B. Frequenzverdopplung.

Fig. 3

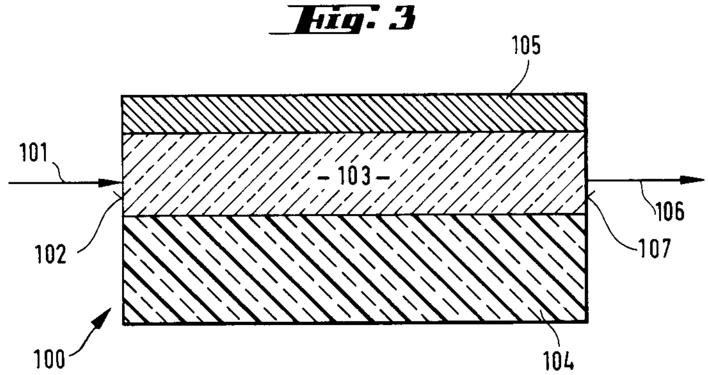


EP 0 596 325 A1

Die Erfindung betrifft ein optisches Bauelement auf Basis von Aktiv-Aktiv-Langmuir-Blodgett (LB)-Schichten, bestehend aus Seitenkettenpolymeren, deren Hauptketten aliphatische Kettenglieder enthalten und deren Seitenketten ein konjugiertes $\pi$-Elektronen-System als nichtlinear optischen (NLO) Chromophor enthalten, dessen eines Ende ein Elektronendonor (D) und dessen anderes Ende ein Elektronenakzeptor (A) ist, wobei sowohl der Donor als auch der Akzeptor bifunktionelle Gruppen sind und deshalb der Chromophor entweder über die Akzeptorseite oder über die Donorseite an die Hauptkette angeknüpft werden kann. Die Erfindung betrifft weiterhin ein Verfahren zur Darstellung von Monomeren des erfindungsgemäßen Seitenkettenpolymeren.

Die nichtlineare Optik ist ein Teilgebiet der Optik, das die nichtlinearen Wechselwirkungen von Licht mit Materie untersucht. Diese treten dann deutlich zu Tage, wenn die elektrische Feldstärke einer Lichtwelle nicht klein gegen die Feldstärke ist, die für die Bindung der einzelnen Materiebausteine untereinander sorgt, insbesondere auch die der Elektronen in Atomen und Molekülen. Im optischen Frequenzbereich stehen Felder hinreichend großer Feldstärke seit der Entwicklung der Laser zur Verfügung. Bei Durchstrahlung eines optisch nichtlinearen Materials mit einem Laserstrahl wird durch die nichtlineare elektrische Polarisation Licht mit völlig anderen Eigenschaften, z.B. anderen Frequenzen, erzeugt.

Die Polarisation P, die in einem Medium durch ein elektrisches Feld induziert wird, kann in einer Potenzreihe der elektrischen Feldstärke E entwickelt werden,

$$P = X^{(1)} + X^{(2)}E^2 + X^{(3)}E^3 + ....$$

wobei X für die elektrische Suszeptibilität steht. Durch NLO-Wechselwirkungen können neue Frequenzen erzeugt sowie die Brechungsindizes des Materials geändert werden. Die Suszeptibilitäten $X^{(2)}$ und $X^{(3)}$ hängen von den sogenannten molekularen Hyperpolarisierbarkeiten ß und $\gamma$ ab.

$$p = \alpha E + \beta E^2 + \gamma E^3 + ...$$
$$X^{(2)}(-w3,w2,w1)_{xyz} = Nf_{x(w3)}f_{y(w2)}f_{z(w1)}D_{XYZxyz}\beta_{xyz}$$

Hierbei ist N die Zahl der Moleküle pro Volumeneinheit, f der lokale Feldfaktor und $D_{XYZxyz}$ ein Tensor, der die Ausrichtungen der Moleküle im makroskopischen System beschreibt.

Wichtige nichtlinear-optische Effekte, die von $X^{(2)}$ abhängen, sind die Frequenzverdopplung eines Laserstrahls, die parametrische Verstärkung eines schwachen Lichtsignals und die elektrooptische Umwandlung von elektrischen Signalen. Um diese Effekte 2. Ordnung zu erzielen, müssen die aktiven Moleküle nichtzentrosymmetrisch ausgerichtet werden, da für zentrosymmetrische Substanzen $X^{(2)}$ = O ist.

Die nichtlineare Optik hat das Potential, durch Umschalten und Vervielfachen optischer Frequenzen und die Umwandlung elektrischer Information in optische Information die Technik der Datenübertragung und -speicherung auf ein viel höheres Niveau zu bringen. Nichtlinear optische Materialien eignen sich zur Herstellung von nichtlinearen optischen Bauelementen. Hierzu gehören beispielsweise elektrooptische Modulatoren, elektrooptische Schalter, elektrooptische Richtkoppler und Frequenzverdoppler. Diese Bauelemente finden Anwendung z.B. in der optischen Nachrichtentechnik, zur Modulation und Steuerung von optischen Signalen, als räumliche Lichtmodulatoren in der optischen Signalverarbeitung, zur Frequenzverdopplung von Halbleiterlasern, für optische Datenspeicherung, Sensortechnik und Xerographie.

Als nichtlinear optische Materialien kommen organische oder anorganische Stoffe, wie Kaliumdihydrogenphosphat (KDP) und Lithiumniobat, in Frage. Kommerziell bereits erhältlich sind z.B. Modulatoren aus Lithiumniobat und Frequenzverdoppler aus KDP.

Gerade organische nichtlinear optische Materialien sind jedoch von größtem Interesse. Gründe dafür sind u.a., daß die Nichtlinearität organischer Materialien sehr viel höher als die anorganischer sein kann. Der Brechungsindex und die Dielektrizitätskonstante sind im allgemeinen geringer. Dies ermöglicht größere innere elektrische Felder, kleinere Polarisationen und geringere Reflexionsverluste was alles zu einer höheren Aktivität im Vergleich zu anorganischen Materialien führt.
Zudem können organische Materialien "maßgeschneidert" synthetisiert werden, um z.B. Materialien mit der gewünschten Transparenz bei den arbeitenden Wellenlängen zu bekommen. Die vielfältigen Verarbeitungsmöglichkeiten organischer Materialien ist ebenfalls ein wichtiger Faktor. Der Stand der Forschung bei nichtlinear optischen organischen Materialien ist z.B. bei Williams, D. J.; Angew. Chem. 96 (1984) 637 und Marder, S., Sohn, J., Stucky, G.; "Materials for Nonlinear Optics" (1991), Am. Chem. Soc. Symp. Ser. 455, Washington DC, 750 p nachzulesen.

Wie bereits erwähnt, benötigt man zur Ausnutzung des $X^2$-Effektes Materialien mit einer nichtzentrosymmetrischen Struktur. Die Forschung konzentriert sich heute u.a. auf folgende Gebiete:

1. Kristalle, die keine Punktsymmetrie besitzen,

2. gepolte Polymere,
3. Physi- und Chemisorption,
4. Schichten.

Das LB-Verfahren bietet wohl die größtmögliche Freiheit bei der chemischen Planung. Bei diesem Verfahren werden Moleküle auf einer Wasseroberfläche gespreitet, durch Verkleinerung der Fläche pro Molekül parallel angeordnet und bei konstantem Schub durch Eintauchen und Herausnehmen eines Trägers auf ein Substrat aufgezogen. Pro Tauchvorgang wird eine monomolekulare Schicht unter Erhaltung ihrer Ordnung übertragen. Für den Aufbau von LB-Schichten verwendet man amphiphile Moleküle, d.h. Moleküle, die ein hydrophiles ("Kopf") und ein hydrophobes Ende ("Schwanz") haben.

Um LB-Schichten mit hohen Suszeptibilitäten 2. Ordnung zu ermöglichen, stellt man organische Verbindungen her, die sowohl hohe molekulare Hyperpolarisierbarkeiten 2. Ordnung $\beta$ als auch amphiphile Eigenschaften besitzen. Eine Verbindung hat einen großen Wert für $\beta$, wenn sie ein konjugiertes Elektronensystem (z.B. eine Stilbeneinheit) enthält, in das eine oder mehrere Elektronendonorgruppen und eine oder mehrere Elektronenakzeptorgruppen eingebaut werden. Am Donor- oder Akzeptorende wird eine hydrophobe Gruppe angehängt. Die Hyperpolarisierbarkeit wird vergrößert, wenn das Molekül Licht im Wellenlängenbereich des einstrahlenden elektrischen Feldes oder des durch NLO erzeugten Feldes absorbiert (sogenannte Resonanzverstärkung). Allerdings sind Absorptionen für viele Anwendungen unerwünscht, da sie Intensitätsverluste verursachen und die optische Stabilität (die Lichtintensität, die ohne permanente Materialstörungen ertragen werden kann) negativ beeinflussen. Eine ideale Verbindung hat eine große Hyperpolarisierbarkeit, ohne im gewünschten Wellenlängenbereich zu absorbieren.

In zahlreichen Publikationen wird über NLO-Messungen von LB-Filmen berichtet. Hierfür wurden u.a. Hemicyanin-, Merocyanin-, Azo- und Stilben-Chromophore verwendet (siehe z.B. J.D. Swalen, Annu. Rev. Mater. Seite 21 (1991) 373).

Für Filme, die aus einem einzelnen Material bestehen, gibt es drei Tauchverhalten (Fig. 1).

- Übertragung nur während des Eintauchens (X- Filme)
- Übertragung nur während des Herausnehmens (Z-Filme)
- Übertragung während des Eintauchens und Herausnehmens (Y-Filme)

X und Z-Filme führen zu nichtzentrosymmetrischen Strukturen, weisen aber im allgemeinen eine geringe mechanische Stabilität auf. Die meisten Materialien bilden Y-Filme, d.h. Kopf-Kopf-Schwanz-Schwanz-Strukturen, was gewöhnlich zu zentrosymmetrischen Gebilden führt. Zwar sind auch Beispiele für Verbindungen bekannt geworden, die sich teilweise in der Trägerebene durch den Tauchvorgang ordnen und so nichtzentrosymmetrische Y-Filme ausbilden, die erreichten Suszeptiblitäten sind jedoch unbefriedigend (siehe z.B. G. Decher et al., J. Chem. Soc. Chem. Comm 1988, 933).

Um mit Substanzen, die Y-Filme bilden, nichtzentrosymmetrische Schichten aufzubauen kann man zwei Strategien verfolgen:

a) man bildet einen Film aus alternierenden aktiven und inaktiven Schichten (siehe z.B. Girling, I. R. et al. Thin Solid Films (1985) 132, 101, Ledoux, I., et al. Europhys. Lett (1987), 3, 803). Diese Methode hat den Nachteil, daß die mögliche NLO-Aktivität der Moleküle nicht effizient ausgenutzt wird, da die Verwendung inaktiver Schichten zu einer "Verdünnung" des Systems führt, d.h., Filme einer bestimmten Dicke zeigen eine geringere NLO-Aktivität.

b) Man bildet alternierende Filme aus zwei aktiven Amphiphilen, deren Dipolmomente in entgegengesetzter Richtung zu dem Alkylkettenrest weisen. Dadurch addieren sich die Dipolmomente, anstatt sich auszulöschen. (Fig. 2)

Für die Realisierung dieser Strategie kann man zwei Systeme mit unterschiedlichen Chromophoren verwenden (siehe z.B. D.B. Neal et al., Electron. Lett. 22 (1986) 460 und D.B. Neal et al., Synth. Met. 28 (1989) 711) oder zwei Systeme mit dem gleichen Chromophor, wobei in dem einen System die hydrophobe Gruppe an die Donorseite angebunden ist, während in dem anderen System der Chromophor an die Akzeptorseite angeknüpft wird (siehe z.B. J. Zyss, J. Mol. Electron. 1 (1985) 25). Diese letzte Kombination bietet theoretisch die besten Möglichkeiten. Wird nämlich der gleiche Chromophor verwendet, sind sowohl die sterischen Ansprüche wie auch die elektrostatischen Wechselwirkungen für beide Schichten annähernd gleich. In anderen Worten, die Packung der Schichten wird i.a. besser, mit der Konsequenz, daß die NLO-Aktivität größer wird. Um solche Systeme herstellen zu können, müssen Moleküle synthetisiert werden, die sowohl an der Donorseite wie auch an der Akzeptorseite modifizierbar sind. In der EP-A-0 313 474 sind niedermolekulare LB-Schichten beschrieben, die als Akzeptorgruppe Sulfonyl tragen. Obwohl mit solchen Materialien gute Ergebnisse erzielt werden, sind die erhaltenen Filme nicht so stabil wie z.B. solche, die mit der Technik der selbstaufbauenden Filme ("self assembled films") erhalten werden.

Es ist bereits bekannt (z.B. L.B. Anderson et al., Synth. Met. 28 (1989) 683) aktiv/aktiv-LB-Filme aus Polymeren aufzubauen. Die dort beschriebenen Hemicyanin-Systeme haben allerdings den großen Nachteil,

daß ihre Absorption im sichtbaren Bereich liegt. Darüber hinaus sind solche geladenen Systeme sehr hydrophil. Dies resultiert in einer sehr starken hydrophyl-hydrophylen Wechselwirkung zwischen den Schichten, was zu wenig stabilen Schichten führt. Um dies zu vermeiden müssen inaktive Schichten eingebaut werden, die allerdings zu der oben erwähnten niedrigen NLO-Aktivität führen. Dies zusammen mit der sehr starken Absorption im sichtbaren Bereich, machen diese Systeme für die Frequenzverdopplung von Halbleiterlasern wenig interessant.

Es wurde nun überraschend gefunden, daß bestimmte, ungeladene, von $\alpha$, $\beta$-ungesättigten Carbonsäuren abgeleitete Polymere, die Sulfonylgruppen enthaltende, NLO-Eigenschaften aufweisende Estergruppen tragen, zum Aufbau von aktiv/aktiv-LB-Schichten geeignet sind.
Solche Polymere sind teilweise aus der EP-A-0 313 476, EP-A-0 313 477 und EP-A-0 370 922, die Ausgangsmonomeren aus der EP-A-0 313 474 bekannt.

Die Verwendung dieser Polymeren zum Aufbau von aktiv/aktiv LB-Schichten wurde jedoch noch nicht beschrieben.

Gegenstand der Erfindung ist daher ein optisches Bauelement, enthaltend ein für elektromagnetische Strahlung durchlässiges polymeres Medium mit einer Suszeptibilität zweiter Ordnung von mindestens $10^{-9}$ elektrostatischen Einheiten, wobei dieses polymere Medium Verbindungen mit polar ausgerichteten, nichtzentrosymmetrischen molekularen Dipolen enthält, die als Strukturelement einen Elektronenakzeptor aufweisen, der über ein konjugiertes $\pi$-Elektronensystem an einen Elektronendonor gebunden ist, wodurch eine Oszillation des molekularen Dipols zwischen einem Grundzustand mit einem ersten Dipolmoment und einem elektronisch angeregten Zustand mit einem zweiten, vom ersten verschiedenen Dipolmoment möglich ist, dadurch gekennzeichnet, daß das nicht ionische polymere Medium alternierend aus mindestens je einem Langmuir-Blodgett-Film mindestens zweier unterschiedlicher, nicht ionischer, nichtlineare optische Eigenschaften aufweisender Polymere besteht.

Die erfindungsgemäßen optischen Bauelemente zeigen neben einer hohen mechanischen und chemischen Stabilität ausgezeichnete nichtlineare optische Eigenschaften, z. B. Frequenzverdopplung.
Vorzugsweise kommen als polymere Verbindungen alle Arten von Polyacrylaten zum Einsatz, bei denen 1 bis 100 %, vorzugsweise 5 bis 70, besonders bevorzugt 20 bis 50 % der Estergruppen entweder Gruppen der Formel I oder II enthalten.

Q-D-G-A    I

D-G-A-Q    II

worin die Symbole die folgenden Bedeutungen haben:

Q : $-(CH_2)_p-X$ mit X: -O-, $-NR^1-$, wobei X die Verbindung zur Hauptkette des Polymers angibt,
p: 1 bis 20, vorzugweise 2 bis 16, besonders bevorzugt 3 bis 12, wobei auch eine oder zwei $CH_2$-Gruppen durch O ersetzt sein können;

D: $-NR^2R^3$, $-O-R^4$, $-S-R^5$, wobei bei Verbindungen der Formel I ein Rest R durch Q ersetzt ist;

A: $-SO_2-R^6$, $-BR^9R^{10}$,

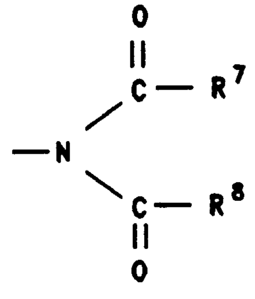

wobei bei Verbindungen der Formel II ein Rest R durch Q ersetzt ist;

G: $-Ar - Y_{(n)} - Ar_{(m)}$
mit Ar: 1,4-Phenylen, Naphtalin-2,6-diyl, Thiazol-2,5-diyl, Thiadiazol-2,5-diyl, Thiophen-2,5-diyl, Furan-2,5-diyl, Oxazol-2,5-diyl, wobei jeweils ein oder zwei H-Atome durch $C_1$-$C_4$ Alkyl- oder Alkoxygruppen ersetzt sein können,

Y: -C ≡ C-, -CH = CH-, -N = N-, -CH = N-, -N = CH-, -NH-N = CH, -HC = N-NH-, n, m; 0, 1,2, 3;

$R^1$,$R^2$,$R^3$, $R^4$,$R^5$,$R^6$,$R^7$, $R^8$,$R^9$,$R^{10}$ unabhängig voneinander eine geradkettige oder verzweigte Alkylgruppe mit 1 bis 22, vorzugsweise 1 bis 16, besonders bevorzugt 1 bis 12 Kohlenstoffatomen, wobei auch eine oder mehrere nicht benachbarte $CH_2$-Gruppen durch O ersetzt sein können, wodurch sich Etherstrukturen ergeben, und wobei $R^7$ und $R^8$ zusammen auch einen Ring bilden können.

D und G können auch Teile eines Ringsystems sein, wodurch einer der Substituenten R eine Einfachbindung sein kann.

Bevorzugt bedeuten:

D: $NR^2$, $R^3$, $OR^4$, $SR^5$

A: -$SO_2$-$R^6$ und

G: $Ar^1$-$Y_{(m)}$-$Ar^2_n$ mit

$Ar^1$, $Ar^2$:

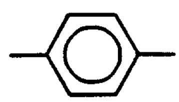

Y: -CH = CH- und n,m: 0,1, 2

Besonders bevorzugt ist Ar - $Y_{(m)}$ - $Ar_{(m)}$:

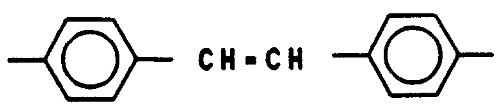

Bevorzugte Polyacrylate sind statistische Copolymere der allgemeinen Formel III,

$[[CH_2\text{-}CZ^1\text{-}COW]_k\ [CH_2\text{-}CZ^2\text{-}COOV]_l\ [CH_2\text{-}CZ^3\text{-}COOU]_t]$ III

worin

$Z^1$, $Z^2$, $Z^3$: unabhängig voneinander H, $CH_3$, $CF_3$, F, Cl, vorzugsweise H, $CH_3$,

V : H oder eine Alkylgruppe mit 1 bis 6, vorzugsweise 1 bis 4, C-Atomen,

U : eine Gruppe Q-D-G-A (Formel IIIa), bzw. Q-A-G-D (Formel IIIb) mit den oben angegebenen Bedeutungen für Q, D, G, A

W: $NR^{12}R^{13}$, $OR^{12}$, wobei $R^{12}$, $R^{13}$ für H oder eine Alkylgruppe mit 1 bis 22, vorzugsweise 1 bis 18 C-Atomen steht,

t: 0,01 - 1,0, vorzugsweise 0,05 - 0,7, besonders bevorzugt 0,2 - 0,5;

l: 0 - 0,5, vorzugsweise 0,01 - 0,2, besonders bevorzugt 0,05 - 0,1

k: 0 - 0,99, vorzugsweise 0,3 - 0,9, besonders bevorzugt 0,5 - 0,8 bedeutet.

Erfindungsgemäße Bauelemente enthalten alternierend LB-Filme aus Polyacrylaten die Gruppen der Formel I bzw. II enthalten. Vorzugsweise enthalten sie alternierend Polyacrylate der Formel IIIa und IIIb.

Die Gruppen der Formel I und II leiten sich von den entsprechenden Alkoholen oder Aminen ab. Ihre Herstellung kann nach literaturbekannten, dem Fachmann geläufigen Methoden erfolgen, wie sie beispielsweise in "Houben Weyl, Methoden der Organischen Chemie, Thieme Verlag, Stuttgart" beschrieben sind. Dabei kann von hier nicht näher aufgeführten Varianten Gebrauch gemacht werden.

Die Synthese von Azoverbindungen (Y : -N = N- ) ist beispielsweise in Houben Weyl, Methoden der Organischen Chemie Bd. 10/III beschrieben.

Schiffsche Basen (Y: -CH = N- ) können z.B. nach P. Keller et al. Solid Phys. Suppl. 14, (1986) 19 dargestellt werden.

Acetylene (Y : -C ≡ C- ) erhält man z. B nach den Methoden von M. Hooper et. al, J. Chem. Soc. 1969, 2453 und J. M Lehn et al, J. Chem. Soc. Commun. 1987, 1425.

Stilbene (Y : -CH = CH- ) sind beispielsweise durch die Wittig, Wittig-Horner oder Wittig-Horner-Emmons Reaktion darstellbar (siehe z.B. EP-A 313 477, EP-A 313 476, EP 370 922, Nijhuis, S., Rikken, G.L.A., Havinga, E.E., ten Hoeve, W., Wynberg, H., Meijer, E. W., J. Chem. Soc., Chem. Commun. (1990) 1093 und Ulman, A., Wiland, C.S. Köhler, W., Robello, D.R., Williams, D.J., Handley, L., J. Am. Chem. Soc. (1990), 112, 7083).

Nach einem bevorzugten Verfahren, das ebenfalls Gegenstand dieser Erfindung ist, werden Verbindungen der Formel I und/oder II mit Y: CH = CH und A: $-SO_2$-durch Kondensation von Toluolen der Formel IV (a/b) mit Aldehyden der Formel V (a/b) dargestellt,

$H_3C$ - Ar - $-SO_2$- - Q IVa

$H_3C$ - Ar - $SO_2$ - $R^6$ IVb

D - Ar - CHO Va

Q - D - Ar - CHO Vb

worin die Symbole die unter Formel I und II genannten Bedeutungen haben. Freie OH- bzw. NHR Gruppen können vorteilhaft mit einer Schutzgruppe $P_G$, beispielsweise einem Tetrahydropyranylether, versehen sein, um unerwünschte Nebenreaktionen zu vermeiden. Die Edukte der Formel IV und V werden in einem polar aprotischen Lösungsmittel, beispielsweise Dimethylformamid, Hexamethylphosphorsauretriamid, Dimethylpropylenharnstoff (DMPU), vorzugsweise Dimethylformamid, vorgelegt, mit einem Gemisch aus einer starken Base und der schwachen dazu korrespondieren Säure versetzt, wobei das molare Verhältnis von Base zu Säure 4:1 bis 1:1, vorzugweise 2:1 bis 1:1, besonders bevorzugt 3:2 ist und für 10 min bis 3 d, vorzugsweise 30 min bis 48 h auf eine Temperatur zwischen 20 und 160 °C, vorzugsweise 80 bis 120 °C erhitzt. Nach Abkühlen wird die Reaktionsmischungen auf einen pH-Wert zwischen 5 und 8, vorzugsweise 6 und 7, eingestellt und nach dem Fachmann geläufigen Methoden aufgearbeitet.

Als Säure-Base Paare kommen beispielsweise Alkohole/Alkoholate, wie t-Butanol/t Butanolat, t-Amylalkohol/t-Amylat oder Dimethylsulfoxid/Dimsyl-Natrium bzw. -kalium, in Frage, bevorzugt ist die Mischung Alkohol/Alkoholat, besonders bevorzugt ist eine Mischung aus t-Butanol und K-t-Butanolat.

In Schema 1 ist ein Beispiel für die Synthese einer Verbindung nach Formel I gezeigt.

Schema 1

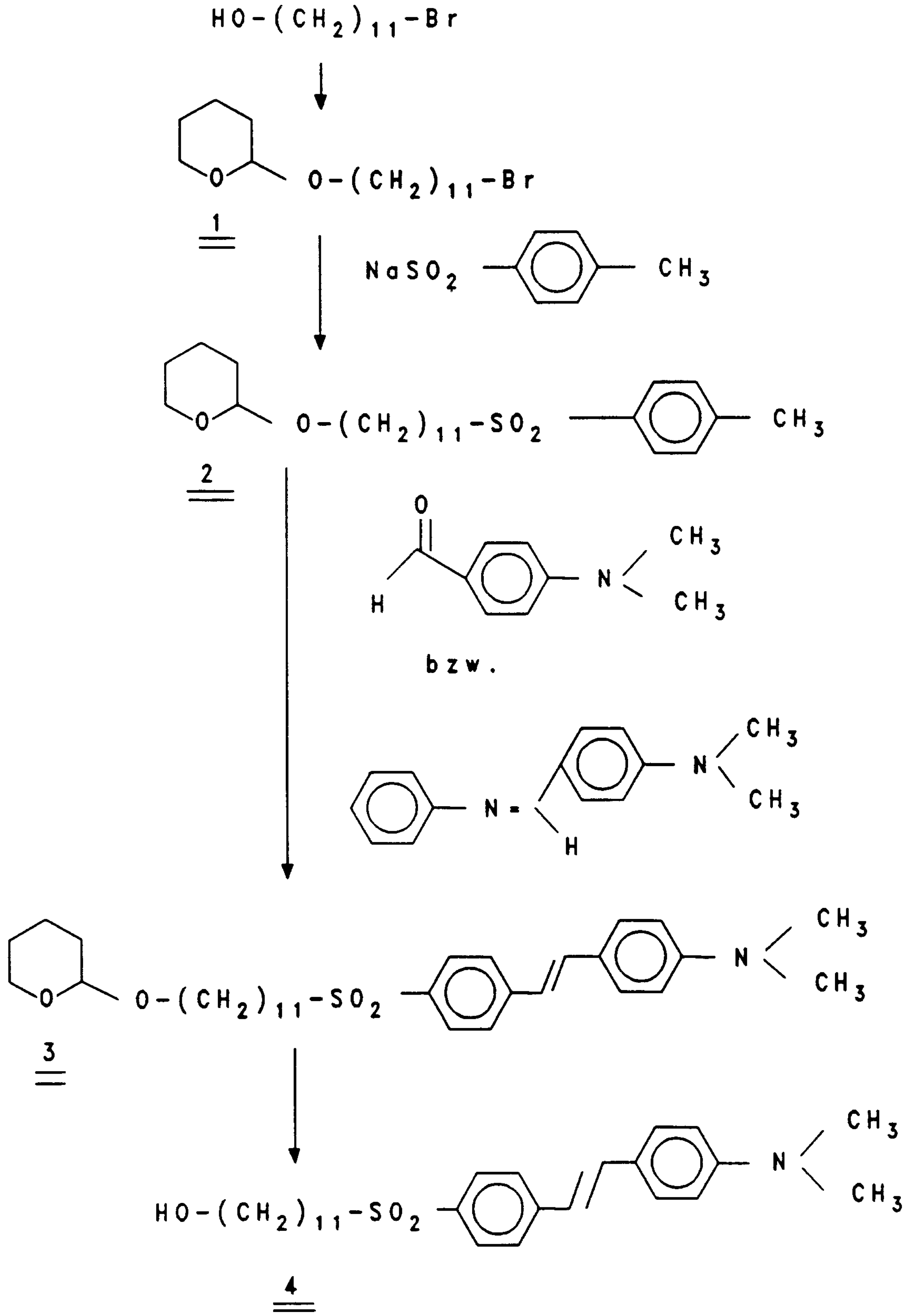


Der Schutz der OH-Gruppe als Tetrahydropyranylether sowie dessen Spaltung erfolgt nach Standardmethoden, siehe beispielsweise T.J. Green, Protective Groups in Organic Synthesis, Wiley, New York 1981.
Die Alkylierung von Sulfinatsalzen findet sich beispielsweise in Vennstra, G. E., Zwaneburg, B., Synthesis (1975) 519; Wildeman, J., van Leusen, A.M, Synthesis (1979) 733 und Bram, G., Loupy, A., Roux-Schmitt, M.G., Sansoulet, J. Strzalko, T., und Seyden-Penne, J., Synthesis (1987) 56.

Analog ist in Schema 2 die Synthese zweier Verbindungen der Formel II gezeigt: Schema 2

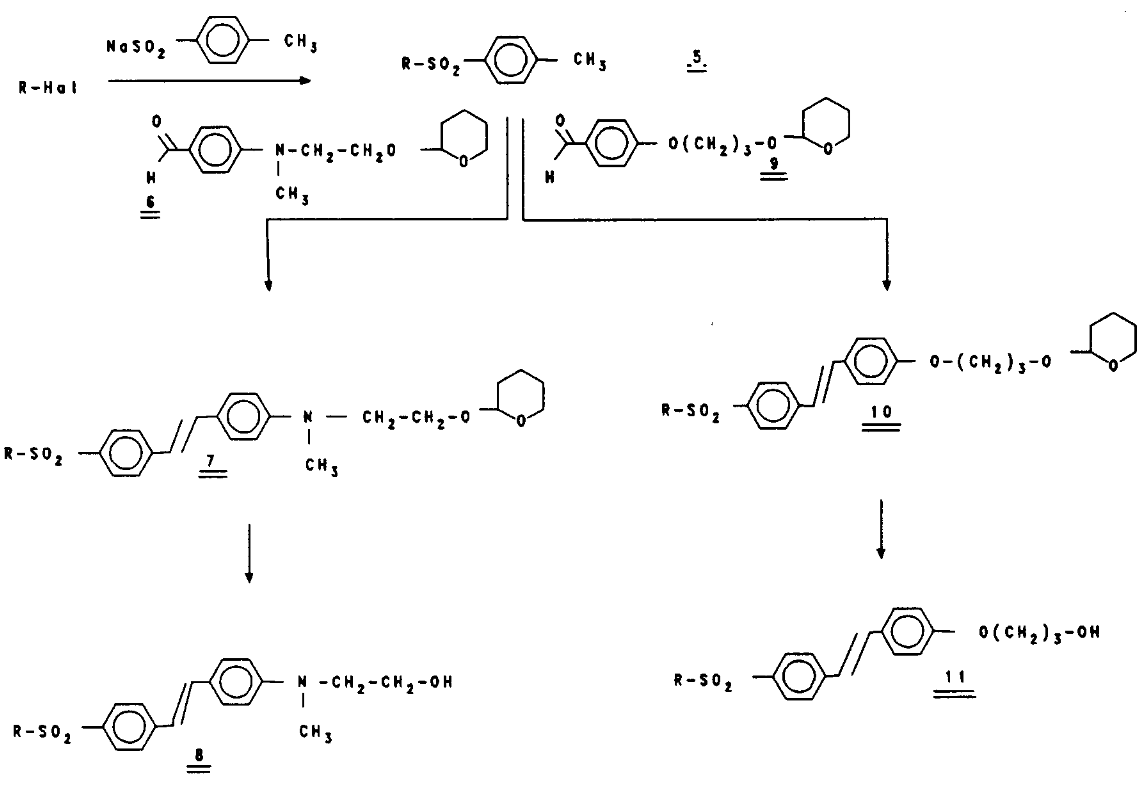

R = $C_{16}H_{33}$

Die Darstellung von Polymeren mit Struktureinheiten der Formel I oder II kann nach verschiedenen Verfahren erfolgen. Beispielsweise können die Verbindungen der Formel I und II mit Acrylsäurederivaten, wie Acrylsäurehalogeniden, zu monomeren Acrylsäureestern umgesetzt und anschließend nach Standardmethoden (siehe z.B. F.U. Bittmeyer, Textbook of Polymer Science, 3. Aufl. S. 49 ff, New York 1984) unter Zusatz eines Radikalstarters, wie Azobisisobutyronitril, polymerisiert werden.

Bei einer anderen, bevorzugten Darstellungsmethode geht man von polymeren Acrylsäurederivaten, wie Acrylsäurehalogeniden, aus und setzt sie in einem inerten Lösungsmittel in Gegenwart einer Base mit Verbindungen der Formel I bzw. II um und sättigt die restlichen Säurederivatfunktionen des Polymers mit einem langkettigen, vorzugsweise $C_8$-$C_{30}$ Amin und/oder Alkohol, wobei letzte eventuell verbleibende Säurehalogenidfunktionen mit einem kurzkettigen Alkohol umgesetzt werden.

Die eingesetzten Polyacrylsäurederivate, wie Polyacrylsäurechloride, besitzen vorzugsweise ein Molgewicht ($M_w$) von 10 000 - 100 000, vorzugsweise 15 000 - 50 000, insbesondere 20 000 - 30 000.

Zur Darstellung des erfindungsgemäßen Bauelements werden alternierend Langmuir-Blodgett (LB) Filme von Polyacrylaten, die Chromophore der Formel I und II enthalten auf einen Träger aufgezogen. Die Darstellung von LB-Filmen kann nach Standardmethoden erfolgen, wie sie beispielsweise bei A. Ulmann, An Introduction to Ultrathin Organic Films, Chap. 2, Academic Press, London 1991 beschrieben sind.

Vorteilhaft werden zur Herstellung der erfindungsgemäßen aktiven/aktiven Filme die amphiphilen Verbindungen in einer Langmuir-Blodgett-Filmwaage in einem hochflüchtigen Lösungsmittel wie Dichlormethan und Chloroform, vorzugsweise Chloroform, auf die Oberfläche gebracht (gespreitet). Aus der Abmessung der Oberfläche, dem Spreitvolumen und der Konzentration der Lösung wird die mittlere Fläche pro Molekül berechnet. Phasenübergänge bei der Kompression der Moleküle lassen sich in der Schub-Flächen-Isotherme verfolgen.

Die Moleküle werden mit einer Barriere oder durch andere Techniken, z.B. Benutzung hydrodynamischer Kräfte, zusammengeschoben, wobei die Ketten bei wachsender Dichte im wesentlichen senkrecht zur Grenzschicht orientiert werden. Während der Kompression entsteht durch Selbstorganisation der Moleküle in der Grenzschicht ein hochgeordneter, monomolekularer Film, dessen konstante Schichtdicke durch die Kettenlänge der Moleküle bestimmt wird. Die typische Dicke eines solchen Films liegt vorzugsweise

zwischen 2 und 5 nm.

Die Herstellung alternierender Schichten kann mit einem sogenannten AB-Trog, der durch eine feststehende Barriere geteilt ist, erfolgen. Auf jeder der beiden Troghälften kann unabhängig voneinander ein Film präpariert werden. Die beiden Troghälften sind durch ein Tauchbecken miteinander verbunden. Für die alternierende Beschichtung wird das Substrat mit einem Filmlift durch die Schicht A ein- und durch die Schicht B ausgetaucht oder umgekehrt.

Schon bei Auftragen einer Doppelschicht von Polymeren gemäß Formel III lassen sich optische Bauelemente mit vorteilhaften nichtlinear optischen Eigenschaften erhalten. Bevorzugt ist es jedoch, Bauelemente mit Filmen aus 2 bis 1000 Doppelschichten, vorzugsweise 50 bis 500, besonders bevorzugt 100 bis 300, herzustellen.

Als Träger sind grundsätzlich alle Festkörper mit sauberen, fettfreien Oberflächen geeignet, beispielsweise Glas, Keramik- oder Metallplatten, Kunststoffschichten aus beispielsweise PMMA, Polystyrol, Polycarbonat, Polyethylen, Polypropylen oder Polytetrafluorethylen oder auch Metallschichten auf den genannten Substraten.

Zur Charakterisierung der alternierenden LB-Schichten hinsichtlich ihrer NLO-Eigenschaften zweiter Ordnung wird die Frequenzverdopplung mit einer Maker Fringe Apparatur gemessen (P.D. Maker et al., Phys. Rev. Lett. 8,21 (1962). Dabei trifft ein p-polarisierter Nd-YAG Laserstrahl auf die zu untersuchende Schicht. Gemessen wird die p-polarisierte frequenzverdoppelte Lichtintensität in Abhängigkeit des Einfallswinkels des Laserstrahls. Aus ihr wird die maximale SHG (Second Harmonic Generation) Intensität bestimmt. Ist die Orientierung der Chromophore in der alternierenden Multischicht unabhängig von der Schichtdicke steigt die SHG-Intensität quadratisch mit der Anzahl der Farbstofflagen. Die Anpassung einer theoretischen Kurve nach (J.E. Sipe, J. Opt. Am.B, 4,4 (1987) 481) an die Meßwerte ermöglicht eine Bestimmung von $X^{(2)}$. Ist die Meßkurve symmetrisch bezogen auf senkrechten Lasereinfall sind die Chromophore in der Farbstoffschicht um den mittleren Tiltwinkel $\alpha$, bezogen auf die Substratebene, geneigt. In der Substratebene ist die Verteilung isotrop

Die erfindungsgemäßen Filme enthalten stabile Multischichten mit guten nichtlinear-optischen Eigenschaften. Sie sind dadurch beispielsweise für elektrooptische Schalter, Diodenlaserfrequenzverdoppler oder optische parametrische Verstärker, z.B. als sogenannte Auffrischer schwacher Lichtsignale in optischen Signalübertragungsnetzen, geeignet.

Die nachfolgenden Beschreibungen und entsprechenden Abbildungen erläutern mögliche Formen des beanspruchten Bauelements, sollen aber keine Einschränkung bewirken.

Fig. 3 zeigt ein Bauelement zur Frequenzverdopplung einer Lichtwelle.

Fig. 4 zeigt eine alternative Ausführung eines Frequenzverdopplers.

Fig. 5 zeigt ein Bauelement zur Modulation einer Lichtwelle durch den linearen elektrooptischen Effekt.

Fig. 6 zeigt ein Bauelement zur Mischung und Verschiebung von Lichtfrequenzen.

Mit Bauelement 100 (Fig. 3) kann eine harmonische Strahlung bei der doppelten Frequenz des eingekoppelten Lichts 101 erzeugt werden, wobei das Licht entweder, wie in der Abbildung in die Stirnfläche 102 oder alternativ über ein Prisma oder ein Gitter eingekoppelt werden kann. Die aktive Schicht 103, die aus einer erfindungsgemässer aktiv-aktiv alternierenden Multischicht besteht oder diese enthält, hat einen höheren Brechungsindex als das Substrat 104 oder die Deckschicht 105 und ist daher ein Lichtwellenleiter. Alternativ kann sich statt der Deckschicht Luft oberhalb der aktiven Schicht befinden. Ferner kann die aktive Schicht lateral strukturiert werden, so daß ein zweidimensionaler Wellenleiter entsteht. Wenn das Bauelement nach den Anforderungen der Erfindung konstruiert wird, wird ein Teil des einfallenden Lichts in Licht der doppelten Frequenz umgewandelt. Dieses frequenzverdoppelte Licht 106 kann dann über die Stirnfläche 107 oder über ein Prisma oder ein Gitter ausgekoppelt werden. In Fig. 3 wird der Wellenleiter so konstruiert, daß die Phasengeschwindigkeit der harmonischen Welle im Wellenleiter dieselbe ist, wie die Phasengeschwindigkeit der eingekoppelten Grundwelle. In einer alterativen Ausführung wird der Wellenleiter so konstruiert, daß die eingekoppelte Grundwelle im Wellenleiter geführt wird, die harmonische Welle aber nach dem sog. Tscherenkow-Prinzip in das Substrat ausgekoppelt wird.

200 (Fig. 4) ist eine alternative Ausführung des oben beschriebenen Bauelements, in der der Wellenleiter ein Hybridensystem aus einem nichtaktiven Teil 201 und der erfindungsgemäßen in aktiv-aktiven Multischicht 202 ist.

Fig. 5 zeigt Bauelement 300 zur Lichtwellenmodulation. Das einfallende Licht 301 wird in die Stirnfläche 302 oder über ein Prisma oder Gitter in die aktive wellenleitende Schicht 303 eingekoppelt. Die Schicht 303 ist als Mach-Zehnder-Interferometer (W. Groh et al. Angew. Chem. Adv. Mater. 101 (1989) 366) lateral strukturiert. In einem Arm des Interferometers sind Elektroden 304 unter- und oberhalb oder auf beiden Seiten des Wellenleiters aufgebracht. Wenn eine Spannung aufgelegt wird, ändert sich über den linearen

elektrooptischen Effekt der Brechungsindex und daher die Phasengeschwindigkeit des Lichts in eine Arm des Interferometers bezüglich des anderen Arms. Dadurch wird die konstruktive oder destruktive Überlagerung der zwei Wellen durch Anlegung der Spannung beeinflußt und das über die Stirnfläche 305 ausgekoppelte Licht intensitätsmoduliert.

Mit dem Bauelement 400 (Fig. 6) kann durch die Wechselwirkung zwischen einem Lichtstrahl der Frequenz w1 und einem zweiten der Frequenz w2 ein neuer Lichtstrahl der Summen- und/oder Differenzfrequenz w3 und w4 erzeugt werden. Die Strahlen der Frequenzen w1 (401) und w2 (402) werden über die Stirnfläche 403 oder über ein Prisma oder Gitter in eine Wellenleiterstruktur 404 eingekoppelt, die entweder analog Fig. 3 aus den erfindungsgemässen aktiv-aktiven Multischichten besteht oder analog Fig. 4 diese enthält. Dieser Wellenleiter kann auch lateral strukturiert sein und somit einen zweidimensionalen Wellenleiter bilden. Durch die nichtlinear-optische Wechselwirkung in der erfindungsgemäßen Multischicht werden die Frequenzen w1 und w2 gemischt, d.h., ein Teil der eingekoppelten Intensität wird in Frequenzen umgewandelt, die der Summe oder der Differenz der Frequenzen w1 und w2 entsprechen. Diese Frequenzen 405 und 406 können über die Stirnfläche 407, alternativ über ein Prisma oder ein Gitter ausgekoppelt werden.

Die nachstehenden Beispiele illustrieren die Erfindung, sollen aber keine Einschränkung bewirken.

Beispiel 1 ω-Brom-tetrahydropyranyloxyalkane

1a) 3-Brom-1-tetrahydropyranyloxypropan

Man legt 13,9 g (0,1 mol) 3-Brompropan-1-ol in 400 ml trockenem Dichlormethan vor und gibt 45,7 ml (0,5 mol) Dihydropyran zu. Dann erfolgt unter Rühren und bei Bedarf unter Kühlung im Eisbad die Zugabe von 190 mg (1 mmol) p-Toluolsulfonsäure-Monohydrat so, daß die Temperatur der Reaktionslösung 25 °C nicht übersteigt. Anschließend beläßt man die Reaktionsmischung 2 h bei Raumtemperatur, extrahiert mit halbgesättigter wäßriger Natriumhydrogencarbonat-Lösung, wäscht die Dichlormethanphase zweimal mit Wasser, trocknet mit Magnesiumsulfat, filtriert vom Trockenmittel ab und destilliert das Lösungsmittel i. Vak. ab. Das verbleibende Öl wird im Vakuum über eine 20 cm Vigreuxkolonne fraktionierend destilliert. Man erhält 14,2 - 16,4 g (65 - 75 %) farbloses Öl, das bei 60 bis 65 °C (0,5 - 1 mbar) siedet.
IR (Film) [$cm^{-1}$]: (3500 sehr schwach), 2990, 2980, 2970, 2880, 2860, 2800, 2740, 2660,1470, 1455, 1360, 1330, 1290, 1265, 1210, 1190, 1145, 1125, 1085, 1050, 1035, 995, 880, 820.
$^1$H-NMR (100-MHz; D-Trichlormethan): δ [ppm] = 1,36 - 1,89 (m, 6 H); 1,99 (m, 2 H); 3,40 - 3,63 (m, 4 H); 3,74 - 3,99 (m, 2 H); 4,58 (m, 1 H).

1b) 11-Brom-1-tetrahydropyranyloxyundecan

Analog Beispiel 1a werden 25,1 g (0,1 mol) 11-Bromundecan-1-ol umgesetzt. Vom Rohprodukt werden die bis 50 °C (0,5 mbar) flüchtigen Anteile abgezogen. Der ölige, schwach gelbe Rückstand (23 g, 70 %) kann ohne weitere Reinigung umgesetzt werden.
$^1$H-NMR (100-MHz; D-Trichlormethan): δ [ppm] = 1,16 - 2,0 (m, 26 H); 3,24 - 4,01 (m, 6 H); 4,55 (m, 1 H).

1c) 2-Brom-1-tetrahydropyranyloxyethan

Analog Beispiel 1a erhält man aus 12,46 g (7,07 ml; 0,1 mol) 2-Bromethanol nach Destillation 16,35 g (80 %) fast farbloses Öl (Sdp.: ca. 50 °C/ 1 mbar).
$^1$H-NMR (100 MHz; D-Trichlormethan): δ [ppm] = 1,38 - 1,98 (m, 6 H); 3,38 - 4,15 (m, 6 H); 4,68 (m, 1 H):

1d) 8-Chlor-3,6-dioxa-1-tetrahydropyranyloxyoctan

Analog Beispiel 1a erhält man aus 16,8 g (14,48 ml, 0,1 mol) 8-Chlor-3,6-dioxaoctan-1-ol (Triethylenglykolmonochlorhydrin) 20,8 g (83 %) einer schwach gelben Flüssigkeit.
$^1$H-NMR (100-MHz; D-Trichlormethan): δ [ppm] = 1,40 - 1,93 (m, 6 H); 3,46 - 3,99 (m, 16 H); 4,62 (m, 1H).

Beispiel 2 4-Alkyl-Sulfonyl-Toluole

2a) 3-(4-Methylphenyl)sulfonyl-1-tetrahydropyranyloxypropan

Man löst 32 g (144 mmol) 3-Brom-1-tetrahydropyranyloxypropan (1a) in 200 ml 1,2-Dimethoxyethan, gibt 26,9 g (151 mmol) wasserfreies 4-Methylphenylsulfinsäure-Natriumsalz, 4,5 g (14 mmol) Tetrabutylammoniumbromid und 1,05 g (7 mmol) Natriumiodid zu und erhitzt die Mischung 24 h zum Sieden. Nach dem Abkühlen gibt man 500 ml Wasser zu, extrahiert dreimal mit je 300 ml Dichlormethan, wäscht die vereinigten Dichlormethanextrakte mit Wasser und trocknet mit Magnesiumsulfat. Nach dem Abfiltrieren des Trockenmittels und Abdestillieren des Lösungsmittels i. Vak. erhält man ein gelb-braunes Öl, das durch Säulenchromatographie (Kieselgel; Dichlormethan bzw. Dichlormethan/Essigsäureethylester-Gemische) gereinigt wird. Man isoliert 32,5 g (76 %) eines farblosen Öls, das beim längeren Stehen teilweise durchkristallisiert (Schmp. < 30 °C).
IR (Film) [$cm^{-1}$]: 3080, 2960, 2900, 2770, 1935, 1825, 1610, 1470, 1455, 1315, 1150, 1090, 1040, 1000, 830.
$^1$H-NMR (100-MHz; D-Trichlormethan): $\delta$ [ppm] = 1,38 - 2,13 (m, 8 H); 2,31 (s, 3 H); 3,10 - 3,33 (m, 2 H); 3,37 - 3,56 (m, 2 H); 3,63 - 3,89 (m, 2 H); 7,34 - 7,79 (AA'XX').

2b) 11-(4-Methylphenyl)sulfonyl-1-tetrahydropyranyloxyundecan

Aus 13,57 g (40.5 mmol) 1b erhält man analog Beispiel 2a nach Säulenchromatographie 13,82 g (83 %) fast farbloses Öl.
IR (Film) [$cm^{-1}$]: 3090, 3060, 2960, 2880, 2760, 1610, 1480, 1465, 1455, 1330, 1315, 1300, 1155, 1105, 1090, 1045, 830.
$^1$H-NMR (100-MHz; D-Trichlormethan): $\delta$ [ppm] = 1,11 - 1,81 (m, 24 H); 2,45 (s, 3 H); 2,95 - 3,15 (m, 2 H), 3,30 - 3,85 (m, 4 H); 4,56 (m, 1 H); 7,35 - 7,78 (AA'XX').

2c) 2-(4-Methylphenyl)sulfonyl-1-tetrahydropyranyloxyethan

Analog Beispiel 2a, jedoch ohne Zusatz von Kaliumiodid, werden 15,38 g (75 mmol) Bromverbindung 1c umgesetzt. Nach Säulenchromatographie erhält man 11,35 g ( 53 %) farbloses Öl.
IR (Film) [$cm^{-1}$]: 3060, 2950, 2880, 2740, 1600, 1495, 1475, 1455, 1440, 1320, 1285, 1185, 1080, 1030, 815, 725.
$^1$H-NMR (100 MHz; D-Trichlormethan): $\delta$ [ppm] = 1,25 - 1,81 (m, 6 H); 2,43 (s, 3 H); 3,33 - 4,15 (m, 6 H), 4,46 (m, 1 H); 7,34, 7,81 (AA'XX').

2d) 8-(4-Methylphenyl)sulfonyl-3,6-dioxa-1-tetrahydropyranyloxyoctan (2d)

Aus 25,2 g (0.1 mol) der Chlorverbindung 1d erhält man analog Beispiel 2a, nach 48 h Reaktionszeit, 16,6 g (45 %) farbloses Öl.
IR (Film) [$cm^{-1}$]: 3080, 3060, 2960, 2890, 2750, 1735, 1655, 1605, 1500, 1460, 1450, 1325, 1300, 1150, 1130, 1090, 1040, 825, 740.
$^1$H-NMR (100-MHz; D-Trichlormethan): $\delta$ [ppm] = 1,39 - 1,88 (m, 6 H); 2,43 (s, 3 H); 3,30 - 3,94 (m, 14 H); 4,58 (m, 1 H); 7,33, 7,79 (AA'XX').

Beispiel 3 Stilbene

3a) 4-Dimethylamino-4'-[(3-tetrahydropyranyloxy)-1-propylsulfonyl]-stilben

Unter Stickstoffatmosphäre werden 5,96 g (20 mmol) 2a und 3,28 g (22 mmol) 4-Dimethylaminobenzaldehyd in 100 ml trockenem Dimethylformamid gelöst. Nach Zugabe von 3 ml (31,6 mmol) tert.-Butanol und 4,48 g (40 mmol) Kalium-tert.-butylat erhitzt man die Reaktionsmischung 30 h auf 120 °C. Die abgekühlte Lösung wird mit 400 ml Wasser versetzt und mit gesättigter Kaliumdihydrogenphosphat-Lösung auf einen pH-Wert von 6 - 7 angesäuert. Dann extrahiert man die wäßrige Suspension fünfmal mit Essigsäureethylester, wäscht die vereinigten Extrakte dreimal mit Wasser und trocknet mit Natriumsulfat. Nach dem Abdestillieren des Lösungsmittels i. Vak. verbleibt ein brauner, öliger Rückstand (9,2 g). Die weitere Reinigung erfolgt durch Säulenchromatographie [Kieselgel; Dichlormethan bzw. Dichlormethan/Essigsäureethylester (50:1) oder 2-Methylpentan-Essigsäureethylester-Gemische]. Insgesamt isoliert

man eine gelbe, schmierige Substanz (4,73 g, 55 %), die in dieser Form weiter umgesetzt werden kann.
IR (Dichlormethan-Lösung) [$cm^{-1}$]: 3030, 2980, 2930, 2890, 2860, 1600, 1580, 1515, 1430, 1415, 1355, 1305, 1270, 1250, 1140, 1030, 890.
$^1$H-NMR (360-MHz; D-Trichlormethan): δ [ppm] = 1,45 - 1,63 (m, 6 H); 1,93 - 2,07 (m, 2 H); 3,007 (s, 6 H); 3,14 - 3,30 (m, 2 H); 3,40 - 3,50 (m, 2 H); 3,72 - 3,82 (m, 2 H); 4,51 (m, 1 H).
CH = CH: 6.910, 7.182 (AB-Spektrum, $^3J_{AB}$ = 16.24 Hz)
Aromatensignale: 6.71, 7.43 und 7.60, 7.83 (jeweils AA'XX')

3b) 4-Dimethylamino-4'-[(11-tetrahydropyranyloxy)-1-undecylsulfonyl]-stilben

Aus 2,40 g (5.87 mmol) 2b erhält man analog Beispiel 3a nach Säulenchromatographie [Kieselgel; Dichlormethan/Essigsäureethylester-Gemische] 1,78 g; (57 %) gelbes Öl.
$^1$H-NMR (100-MHz; D-Trichlormethan): δ [ppm] = 1,11 - 1,94 (m, 24 H); 1,93 - 2,07 (m, 2 H); 2,99 (s, 6 H); 3,20 - 3,99 (m, 6 H); 4,54 (m, 1 H);
CH = CH: 6.89, 7.20 (AB-Spektrum, $^3J_{AB}$ = 16.3 Hz)
Aromatensignale: 6.69, 7.41 und 7.59, 7.81 (jeweils AA'XX').

3c) 4-(Bishexadecyl)amino-4'-[3-tetrahydropyranyloxy)-1-propylsulfonyl]stilben

Aus 2,98 g (10 mmol) 2a und 5,70 g (10 mmol) Bishexadecylaminobenzaldehyd erhält man analog Beispiel 3a nach Säulenchromatographie [Kieselgel; Dichlormethan/Essigsäureethyl-ester-Gemische] 2,63 g; (32 %) gelbes Öl.
$^1$H-NMR (300-MHz; D-Trichlormethan): δ [ppm] = 0,84 - 0,91 (t, 6 H); 1,20 - 1,36 (m, 54 H); 1,44 - 1,80 (m, 12 H); 1,95 - 2,07 (m, 2 H); 3,17 - 3,34 (m, 2 H); 3,71 - 3,82 (m, 2 H); 4,51 (m, 1 H)
CH = CH: 6.865, 7.164 (AB-Spektrum, $^3J_{AB}$ = 16 Hz)
Aromatensignale: 6.62, 7.39 und 7.59, 7.82 (jeweils AA'XX').

3d) 1-(N-Ethylcarbazol-3-yl)-2-[4-(3-tetrahydropyranyloxy)-1-propylsulfonyl]phenyl-ethen

Analog Beispiel 3a erhält man aus 2,98 g (10 mmol) 2a und 2,68 g (12 mmol) N-Ethylcarbazol-3-carboxaldehyd nach Säulenchromatographie [Kieselgel; Dichlormethan/Essigsäureethylester-Gemische] 1,56 g; (31 %) gelbes Öl.
$^1$H-NMR [100-MHz; D-Trichlormethan]: δ [ppm] = 1,30 - 2,15 (t und m, überlagert, 13 H); 3,10 - 3,58 (m, 4 H); 3,63 - 3,90 (m, 2 H); 4,35 (q, überlagert, 2 H); 4,49 (m, 1 H); 7,00 - 8,28 (m, 13 H).

3e) 4-Methoxy-4'-[(3-tetrahydropyranyloxy)-1-propylsulfonyl]stilben

Aus 2,98 g (10 mmol) 2a und 1,42 g (10,5 mmol) 4-Methoxybenzaldehyd erhält man analog Beispiel 3a nach Säulenchromatographie [Kieselgel; Dichlormethan/Essigsäureethylester-Gemische] 1,78 g; (43 %) farbloses Pulver.
IR (KBr) [$cm^{-1}$]: 3090 (w), 3070 (w), 3060 (w), 3030 (w), 2950 (s), 2870 (m), 1635 (w), 1605 (s), 1590 (vs), 1515 (vs), 1310 (s), 1300 (s), 1270 (m), 1255 (vs), 1180 (s), 1140 (vs), 1120 (s), 1085 (s), 1040 (vs), 985 (vs), 975 (vs) 930 (m), 840 (s), 790(s).
$^1$H-NMR [300-MHz; D-Trichlormethan]: δ [ppm] = 1,45 - 1,80 (m, 6 H); 1,96 - 2,07 (m, 2 H); 3,20 - 3,28 (m, 2 H); 3,41 - 3,50 (m, 2 H); 3,72 - 3,81 (m, 2 H); 3,845 (s, 3 H); 4,51 (m, 1 H)
CH = CH: 6,990; 7,203 (AB-Spektrum, $^3J_{AB}$ = 16 Hz)
Aromatensignale: 6,922; 7,485 und 7,631 (jeweils AA'XX').
UV: $\lambda_{max}$ = 336 nm (Trichlormethan); $\lambda_{max}$ = 330 nm (Acetonitril).

3f) 4-Octadecyloxy-4'-[(3-tetrahydropyranyloxy)-1-propylsulfonyl]-stilben

Aus 2,03 g (6.8 mmol) 2a und 3,0 (8mmol) 4-Octadecyloxybenzaldehyd erhält man analog Beispiel 9, wobei die Reaktionsmischung aber nur 2h bei RT gerührt wird, nach Säulenchromatographie [Kieselgel; Dichlormethan/Essigsäureethylester-Gemische] 1,34 g; (30 %) farbloses Pulver.
$^1$H-NMR (300-MHz; D-Trichlormethan): δ [ppm] = 0,88 (t, 3 H); 1,24 - 1,60 (m, 36 H); 1,95 - 2,06 (m, 2 H); 3,18 - 3,30 (m, 2 H); 3,41 - 3,51 (m, 2 H); 3,71 - 3,81 (m, 2 H); 3,983 (t, 2 H); 4,51 (m, 1 H)
CH = CH: 6,98; 7,20 (AB-Spektrum, $^3J_{AB}$ = 16 Hz)
Aromatensignale: 6,91; 7,47 und 7,63, 7,86 (jeweils AA'XX').

3g) 4-Methoxy-4'-[(11-tetrahydropyranyloxy)-1-undecylsulfonyl]-stilben

Analog Beispiel 3a erhält man aus 4,1 g (10 mmol) 2b und 1,42 g (10.5 mmol) 4-Methoxybenzaldehyd nach Säulenchromatographie [Kieselgel; Dichlormethan/Essigsäureethylester-Gemische] 960 mg; (18 %) schwach gelbes Öl.

3h) 3,4-Ethylendioxy-4'-[(3-tetrahydropyranyloxy)-1-propylsulfonyl]-stilben

Analog Beispiel 3a erhält man 2,98 g (10 mmol) 2a und 1,65 g (11 mmol) Piperonal nach Säulenchromatographie [Kieselgel; Dichlormethan-Essigsäureethylester-Gemische] 1,22 g; (27 %) gelbes Öl.
$^1$H-NMR [100-MHz; D-Trichlormethan]: $\delta$ [ppm] = 1,36 - 1,83 (m, 6 H); 1,86 - 2,11 (m, 2 H); 3,11 - 3,33 (m, 2 H); 3,36 - 3,3.58 (m, 2 H); 3,63 - 3,90 (m, 2 H); 4,36 (m, 1 H); 5,99 (s, 2 H); 6,73 - 7,93 (m, 9 H).

3i) 4-Dibutylamino-4'-[(3-tetrahydropyranyloxy-1-propylsulfonyl]-stilben

Wie in Beispiel 3a beschrieben erhält man aus 2a und Dibutylaminobenzaldehyd das hydroxygeschützte Stilben 3i.

3j) 2,4,6-Trimethoxy-4'-[(3-tetrahydropyranyloxy)-1-propylsulfonyl]-stilben

Analog Beispiel 3a erhält man aus 2,98 g (10 mmol) 2a und 2,16 g (11 mmol) 2,4,6-Trimethoxybenzaldehyd nach Säulenchromatographie [Kieselgel; Dichlormethan/Essigsäureethylester-Gemische] 1,28 g; (27 %) gelbes Öl.
$^1$H-NMR [100-MHz; D-Trichlormethan]: $\delta$ [ppm] = 1,38 - 1,79 (m, 6 H); 1,90 - 2,14 (m, 2 H); 3,11 - 3,78 (m, 6 H); 3,85 (s, 3 H); 3,90 (s, 6 H); 6,15 (s, 2 H); 7,33 - 7,90 (m, 6 H).

3k) 4-Methylmercapto-4'-[(3-tetrahydropyranyloxy)-1-propylsulfonyl]-stilben

Analog Beispiel 3a erhält man aus 5,96 g (20 mmol) 2a und 3,64 g (24 mmol) 4-Methylmercaptobenzaldehyd nach 21 h bei 120 °C 2,55 g (29 %) schwach gelbes Öl.
$^1$H-NMR [300-MHz; D-Trichlormethan]: $\delta$ [ppm] = 1,45 - 1,80 (m, 6 H); 1,92 - 2,08 (m, 2 H); 2,512 (s, 3 H); 3,15 - 3,28 (m, 2 H); 3,39 - 3,51 (m, 2 H); 3,71 - 3,81 (m, 2 H); 4,50 (m, 1 H)

| | |
|---|---|
| CH = CH: | 7,075; 7,205 (AB-Spektrum, $^3J_{AB}$ = 16 Hz, E-Stilben) |
| Aromatensignale: | 7,255; 7,460 und 7,645, 7,870 (jeweils AA'XX') |

Beispiel 4 Verbindungen der Formel I

4a) 4-Dimethylamino-4'[(1-hydroxy)-3-propylsulfonyl]-stilben

Eine Lösung von 810 mg (1.89 mmol) der Substanz aus Bsp. 3a in 15 ml Tetrahydrofuran wird mit 3 ml 6 M Salzsäure versetzt und 4- 8 Stunden zum Sieden erhitzt. Sobald die Umetzung nach dünnschichtchromatographischer Reaktionskontrolle beendet ist, wird die abgekühlte Lösung mit verdünnter Natronlauge auf einen pH-Wert von 6 - 7 gebracht und dann mit Wasser auf das dreifache Volumen verdünnt. Dabei fällt ein voluminöser, gelber Niederschlag aus, der abfiltriert, mit Wasser gewaschen und im Vakuumexsikkator über Blaugel oder Kaliumhydroxid
plätzchen getrocknet wird. Man erhält 560 mg (86 %) hellgelbes Pulver (Schmp. 247 - 249 °C), das meist in hoher Reinheit anfällt. Falls die Substanz verunreinigt ist, wird aus Essigsäureethylester umkristallisiert.
$^1$H-NMR (360-MHz; $D_6$-DMSO;): $\delta$ [ppm] = 1,63 - 1,73 (m, 2 H); 2,939 (s, 6 H); 3,23 - 3,32 (m, 4 H); 3,415 (q, 2 H); 3,60 (t, 1 H)

| | |
|---|---|
| CH = CH: | 7,060; 7,345 (AB-Spektrum, $^3J_{AB}$ = 16.3 Hz) |
| Aromatensignale: | 6,72; 7,48 und 7,75; 7,80 (jeweils AA'XX'). |

IR (KBr) [$cm^{-1}$]: 3520 (s), 3420 (s, br) 3040 (w), 2920 (s), 2840 (s), 1605 (s), 1585 (s), 1525 (m), 1465 (m), 1405 (m), 1360 (m); 1315 (s), 1295 (s), 1285 (s), 1140 (vs), 1085 (s), 970 (s), 825 (s), 600 (s), 550 (s)
UV: $\lambda_{max}$ = 386 nm (Trichlormethan); $\lambda_{max}$ = 380 nm (Acetonitril).

4b) 4-Dimethylamino-4'-[(1-hydroxy)-11-undecylsulfonyl]-stilben

500 mg (0.92 mmol) der Substanz aus Bsp. 3b werden wie in Beispiel 4a beschrieben in Tetrahydrofuran gelöst und mit Salzsäure behandelt. Man erhält 370 mg (88 %) gelbes Pulver mit Schmp. 153 - 155 °C.
$^1$H-NMR (300 MHz; D-Trichlormethan): δ [ppm] = 1,20 - 1,40 (m, 12 H); 1,49 - 1,60 (m, 4 H); 1,65 - 1,77 (m, 2 H); 3,010 (s, 6 H); 3,03 - 3,11 (m, 2 H); 3,58 - 3,67 (m, 2 H);
CH = CH: 6,915; 7,188 (AB-Spektrum, $^3J_{AB}$ = 16 Hz)
Aromatensignale: 6,72; 7,44 und 7,60, 7,82 (jeweils AA'XX').

4c) 4-(Bishexadecyl)amino-4'-[(1-hydroxy)-3-propylsulfonyl]-stilben

1,91 g (2.24 mmol) aus Beispiel 3c werden analog Beispiel 12 in Tetrahydrofuran mit HCl behandelt. Nach dem Neutralisieren extrahiert man die wäßrige Mischung mehrmals mit Dichlormethan, trocknet mit Natriumsulfat und destilliert das Lösungsmittel i. Vak. ab. Der Rückstand wird durch Säulenchromatographie (Kieselgel; Dichlormethan/Essigsäureethylester 10:1) gereinigt. Das schmierige Produkt erhitzt man in wenig Toluol, versetzt nach dem Abkühlen mit Methanol
und fällt bei -20 °C aus. Man erhält einen schwach gelben Feststoff mit einem Schmelzpunkt von 55 - 57 °C (1,33 g, 77 %).
$^1$H-NMR (300-MHz; D-Trichlormethan): δ [ppm] = 0,88 (t, 6 H); 1,18 - 1,38 (m, 48 H); 1,24 - 1,36 (m, 6 H); 1,95 - 2,06 (m, 2 H); 3,19 - 3,34 (m, 4 H); 3,72 - 3,79 (m, 3 H);
CH = CH: 6,866; 7,152 (AB-Spektrum, $^3J_{AB}$ = 16 Hz)
Aromatensignale: 6,64; 7,39 und 7,58; 7,82 (jeweils AA'XX').

4d) 4-Methoxy-4'-[(1-hydroxy)-3-propylsulfonyl]-stilben

Eine Lösung von 630 mg (1.51 mmol) der Substanz aus Bsp. 3 g in 10 ml Tetrahydrofuran wird mit 3 ml 2 M Salzsäure versetzt und 4-8 Stunden auf 60 °C erhitzt. Sobald die Umsetzung nach dünnschichtchromatographischer Reaktionskontrolle beendet ist, wird die abgekühlte Lösung mit verdünnter Natronlauge auf einen pH-Wert von 6-7 gebracht und dann mit Wasser auf das fünffache Volumen verdünnt. Dabei fällt ein voluminöser, farbloser Niederschlag aus, der abfiltriert, mit Wasser gewaschen und im Vakummexsikkator über Blaugel oder Kaliumhydroxid-plätzchen getrocknet wird. Man erhält 410 mg (82 %) graues Pulver, das durch Säulenchromatographie gereinigt wird.
$^1$H-NMR (300 MHz; D-Trichlormethan): δ [ppm] = 1,67 (t, 1H); 1,95-2,06 (m, 2H); 3,22-3,29 (m, 2H); 3,756 (q, 2H); 3,848 (s, 3H).
CH = CH: 6,980, 7,208 (AB-Spektrum; $^3J_{AB}$ = 16 Hz)
Aromatensignale: 6,93, 7,49 und 7,64, 7,86 (jeweils AA'XX').

4e) 3,4-Ethylendioxy-4'-[(1-hydroxy)-3-propylsulfonyl]-stilben

Analog Beispiel 4a erhält man aus 1,22 g der Substanz aus Bsp. 3h 770 mg (78 %) fast farbloses Öl.
$^1$H-NMR [100-MHz; D-Trichlormethan]: δ [ppm] = 1,88 - 2,14 (m, 2 H); 3,11 - 3,38 (m, 2 H); 3,72 (t, 2 H); 6,00 (s, 2 H); 6,73 - 7,93 (m, 9 H).

4f) 1-(N-Ethylcarbazol-3-yl)-2-[4-(3-hydroxy)-1-propylsulfonyl]phenyl-ethen

Analog Beispiel 4a erhält man aus 1,56 g (3.1 mmol) der Substanz aus Bsp. 3d nach Säulenchromatographie [Kieselgel; Dichlormethan/Essigsäureethylester-Gemische] 1,03 g; (80 %) gelbes Öl.
$^1$H-NMR [100-MHz; D-Trichlormethan]: δ [ppm] = 1,40 (t, 3 H); 1,83 - 2,25 (m,br, 3 H); 3,10 - 3,34 (m, 2 H), 3,58 - 3,80 (m, 2 H); 4,33 (q, 2 H); 6,43 - 8,28 (m, 13 H)

4g) 4-Dibutylamino-4'-[(3-hydroxy)-1-propylsulfonyl]-stilben

Wie in 4a beschrieben liefert die saure Hydrolyse des Tetrahydropyranylethers aus Beispiel 3i die Hydroxyverbindung 4g.
$^1$H-NMR (300-MHz; D-Trichlormethan: δ [ppm] = 0,96 (t, 6 H); 1,23 - 1,43 (m, 4 H); 1,49 - 1,69 (m, 5 H); 1,94 - 2,06 (m, 2 H); 3,20 - 3,34 (m, 6 H); 3,71 - 3,78 (m, 2 H);
CH = CH: 6,868; 7,162 (AB-Spektrum $^3J_{AB}$ = 16 Hz)

Aromatensignale: 6,59; 7,39 und 7,59, 7,82 (jeweils AA'XX').

4h) 4-Methylmercapto-4'-[(1-hydroxy)-3-propylsulfonyl]-stilben

Analog Beispiel 4a erhält man mit der Substanz aus Bsp. 3k ein farbloses Pulver (60 %)
$^1$H-NMR [300-MHz; D-Trichlormethan]: $\delta$ [ppm] = 1,69 (br, 1 H); 1,95 - 2,05 (m, 2 H); 2,51 (s, 3 H); 3,22 - 3,29 (m, 2 H); 3,75 (t, br, 2 H);
CH = CH: 7,072; 7,200 (AB-Spektrum, $^3J_{AB}$ = 16 Hz, E-Stilben)
Aromatensignale: 7,255, 7,458 und 7,649; 7,872 (jeweils AA'XX').

4i) Aus Verbindung 2a erhält man analog

I. 4-(Bisoctadecyl)amino-4'-[(1-hydroxy)-3-propylsulfonyl]-stilben
II. 4-(N-Ethyl-N-octadecyl)amino-4'-[(1-hydroxy)-3-propylsulfonyl]-stilben
III. 4-Hexadecyloxy-4'-[(1-hydroxy)-3-propylsulfonyl]-stilben
IV. 4-Tetradecyloxy-4'-[(1-hydroxy)-3-propylsulfonyl]-stilben
V. 4-Dococyloxy-4'[(1-hydroxy)-3-propylsulfonyl]-stilben
VI. 2,4-Bis(octadecyloxy)-4'-[(1-hydroxy)-3-propylsulfonyl]-stilben
VII. 4-Hexadecylthio-4'-[(1-hydroxy)-3-propylsulfonyl]-stilben
VIII. 4-Octadecylthio-4'-[(1-hydroxy)-3-propylsulfonyl]-stilben;

4j) Unter Verwendung von 2b erhält man analog

I. 4-Dibutylamino-4'-[(1-hydroxy)-11-undecylsulfonyl]-stilben
II. 4-(Bisoctadecyl)amino-4'-[(1-hydroxy)-11-undecylsulfonyl]-stilben
III. 4-(N-Ethyl-N-octadecyl)amino-4'-[(1-hydroxy)-11-undecylsulfonyl]-stilben
IV. 4-Hexadecyloxy-4'-[(1-hydroxy)-11-undecylsulfonyl]-stilben
V. 4-Tetradecyloxy-4'-[(1-hydroxy)-11-undecylsulfonyl]-stilben
VI. 4-Dococyloxy-4'-[(1-hydroxy)-11-undecylsulfonyl]-stilben
VII. 2,4-Bis(octadecyloxy)-4'-[(1-hydroxy)-11-undecylsulfonyl]-stilben
VIII. 4-Hexadecylthio-4'-[(1-hydroxy)-11-undecylsulfonyl]-stilben
IX. 4-Octadecylthio-4'-[(1-hydroxy)-11-undecylsulfonyl]-stilben

4k) Wie in Beispiel 1a und 2a beschrieben erhält man aus 4-Chlor-1-butanol 4-(4-Methylphenyl)sulfonyl-1-tetrahydropyranyloxybutan. Unter Verwendung dieser Verbindung erhält man analog:

I. 4-Dibutylamino-4'-[(1-hydroxy)-4-butylsulfonyl]-stilben
II. 4-(Bishexadecyl)amino-4'-[(1-hydroxy)-4-butylsulfonyl]-stilben
III. 4-(Bisocatdecyl)amino-4'-[(hydroxy)-4-butylsulfonyl]-stilben
IV. 4-(N-Ethyl-N-octadecyl)amino-4'-[(1-hydroxy)-4-butylsulfonyl]-stilben
V. 4-Hexadecyloxy-4'-[(1-hydroxy)-4-butylsulfonyl]-stilben
VI. 4-Octadecyloxy-4'-[(1-hydroxy)-4-butylsulfonyl]-stilben
VII. 4-Tetradecyloxy-4'-[(1-hydroxy)-4-butylsulfonyl]-stilben
VIII. 4-Dococyloxy-4'-[(1-hydroxy)-4-butylsulfonyl]-stilben
IX. 2,4-Bis(octadecyloxy)-4'-[(1-hydroxy)-4-butylsulfonyl]-stilben
X. 4-Hexadecylthio-4'-[(1-hydroxy)-6-hexylsulfonyl]-stilben
XI. 4-Octadecylthio-4'-[(1-hydroxy)-4-butylsulfonyl]-stilben

4l) Wie in den Beispielen 1a und 2a beschrieben erhält man aus 6-Chlor oder 6-Brom-1-hexanol 6-(4-Methylphenyl)sulfonyl-1-tetrahydropyranyloxyhexan. Unter Verwendung dieser Verbindung erhält man analog:

I. 4-Dibutylamino-4'-[(1-hydroxy)-6-hexylsulfonyl]-stilben
II. 4-(Bishexadecyl)amino-4'-[(1-hydroxy)-6-hexylsulfonyl]-stilben
III. 4-(Bisoctadecyl)amino-4'-[(1-hydroxy)-6-hexylsulfonyl]-stilben
IV. 4-(N-Ethyl-N-octadecyl)amino-4'-[(1-hydroxy)-6-hexylsulfonyl]-stilben
V. 4-Hexadecyloxy-4'-[(1-hydroxy)-6-hexylsulfonyl]-stilben
VI. 4-Octadecyloxy-4'-[(1-hydroxy)-6-hexylsulfonyl]-stilben

VII. 4-Tetradecyloxy-4'-[(1-hydroxy)-6-hexylsulfonyl]-stilben
VIII. 4-Dococyloxy-4'-[(1-hydroxy)-6-hexylsulfonyl]-stilben
IX. 2,4-Bis(octadecyloxy)-4'-[(1-hydroxy)-6-hexylsulfonyl]-stilben
X. 4-Hexadecylthio-4'-[(1-hydroxy)-6-hexylsulfonyl]-stilben
XI. 4-Octadecylthio-4'-[(1-hydroxy)-6-hexylsulfonyl]-stilben

4m) Wie in den Beispielen 1a und 2a beschrieben erhält man aus 8-Brom- oder 8-Chlor-1-octanol8-(4-Methylphenyl)sulfonyl-1-tetrahydropyranyloxyoctan. Unter Verwendung dieser Verbindung erhält man analog:

I. 4-Dibutylamino-4'-[(1-hydroxy)-8-octylsulfonyl]-stilben
II. 4-(Bishexadecyl)amino-4'-[(1-hydroxy)-8-octylsulfonyl]-stilben
III. 4-(Bisoctadecyl)amino-4'-[(hydroxy)-8-octylsulfonyl]-stilben
IV. 4-(N-Ethyl-N-octadecyl)amino-4'-[(1-hydroxy)-8-octylsulfonyl]-stilben
V. 4-Hexadecyloxy-4'-[(1-hydroxy)-8-octylsulfonyl]-stilben
VI. 4-Octadecyloxy-4'-[(1-hydroxy)-8-octylsulfonyl]-stilben
VII. 4-Tetradecyloxy-4'-[(1-hydroxy)-8-octylsulfonyl]-stilben
VIII. 4-Dococyloxy-4'-[(1-hydroxy)-8-octylsulfonyl]-stilben
IX. 2,4-Bis(octadecyloxy)-4'-[(1-hydroxy)-8-octylsulfonyl]-stilben
X. 4-Hexadecylthio-4'-[(1-hydroxy)-8-octylsulfonyl]-stilben
XI. 4-Octadecylthio-4'-[(1-hydroxy)-8-octylsulfonyl]-stilben

4n) Wie in den Beispielen 1a und 2a beschrieben erhält man aus 12-Brom-1-dodecanol 12-(4-Methylphenyl)sulfonyl-1-tetrahydropyranyloxydodecan. Unter Verwendung dieser Verbindung erhält man analog:

I. 4-Dibutylamino-4'-[(1-hydroxy)-12-dodecylsulfonyl]-stilben
II. 4-(Bishexadecyl)amino-4'-[(1-hydroxy)-12-dodecylsulfonyl]-stilben
III. 4-(Bisoctadecyl)amino-4'-[(1-hydroxy)-12-dodecylsulfonyl]-stilben
IV. 4-(N-Ethyl-N-octadecyl)amino-4'-[(1-hydroxy)-12-dodecylsulfonyl]-stilben
V. 4-Hexadecyloxy-4'-[(1-hydroxy)-12-dodecylsulfonyl]-stilben
VI. 4-Octadecyloxy-4'-[(1-hydroxy)-12-dodecylsulfonyl]-stilben
VII. 4-Tetradecyloxy-4'-[(1-hydroxy)-12-dodecylsulfonyl]-stilben
VIII. 4-Dococyloxy-4'-[(1-hydroxy)-12-dodecylsulfonyl]-stilben
IX. 2,4-Bis(octadecyloxy)-4'-[(1-hydroxy)-12-dodecylsulfonyl]-stilben
X. 4-Hexadecylthio-4'-[(1-hydroxy)-12-dodecylsulfonyl]-stilben
XI. 4-Octadecylthio-4'-[(1-hydroxy)-12-dodecylsulfonyl]-stilben

4o) 4-Octadecyloxy-4'-[(3-hydroxy)-1-propylsulfonyl]-stilben

9,02 (13,8 mmol) 3i werden in 140 ml Tetrahydrofuran gelöst. Nach Zugabe von 100 ml 2 M Salzsäure erwärmt man die Mischung 4 h auf 50 °C. Dabei trübt sich die Lösung und beim Abkühlen fällt ein farbloser Niederschlag aus, der abfiltriert und zuerst mit wenig THF und dann mit Wasser gewaschen wird. Der Feststoff wird im Vakuumexsikkator getrocknet. Man erhält 4,50 g farbloses Pulver mit Schmp. 137 °C. Die Mutterlauge engt man ein, extrahiert mehrmals mit Dichlormethan, trocknet die Extrakte mit Magnesiumsulfat und chromatographiert den nach dem Abdestillieren des Lösungsmittels erhaltenen öligen Rückstand mit Isohexan/Essigester-Gemischen an einer Kieselgel-Säule. Insgesamt isoliert man 5,90 g (75 %) Produkt.
$^1$H-NMR (300 MHz; D-Trichlormethan): $\delta$ [ppm] = 0,88 (t, 3H); 1,24-1,50 (m, 30 H); 1,75-1,85 (m, 2H); 1,95-2,05 (m, 2H); 3,22-3,29 (m, 2H); 3,76 (q, 2H); 3,985 (t, 2H);

| | |
|---|---|
| CH = CH: | 6,98; 7,20 (AB-Spektrum, $^3J_{AB}$ = 16 Hz) |
| Aromatensignale: | 6,91; 7,47 und 7,63; 7,86 (jeweils AA'XX'). |

Beispiel 5 Sulfone

5a) Hexadecyltolylsulfon

Analog Beispiel 2a werden 9,15 g (30 mmol) 1-Bromhexadecan und 5,88 g (33 mmol) p-Toluolsulfinsäurenatriumsalz (wasserfrei) umgesetzt. Nach Chromatographie über eine kurze Kieselgelsäule (Dichlormethan/Essigsäureethylester 10/1) erhält man 10,7 g (94 %) 5a.
$^1$H-NMR [100-MHz; D-Trichlormethan]: δ [ppm] 0,96 (t, 3 H); 1,20 - 1,29 (s, br, 26 H); 1,50 - 1,88 (m, 2 H); 2,44 (s, 3 H); 2,93 - 3,15 (m, 2 H); 7,23; 7,78 (AA'XX', 4 H).

5b) Analog 5a aus 1-Brombutan: Butyltolylsulfon

5c) Analog Beispiel 5a aus 1-Bromhexan: Hexyltolylsulfon

5d) Analog Beispiel 5a aus 1-Bromoctan: Octyltolylsulfon

5e) Analog Beispiel 5a aus 1-Bromdecan: Decyltolylsulfon

5f) Analog Beispiel 5a aus 1-Bromdodecan: Dodecyltolylsulfon

5g) Analog Beispiel 5a aus 1-Bromtetradecan: Tetradecyltolylsulfon

5h) Analog Beispiel 5a aus 1-Bromoctadecan: Octadecyltolylsulfon

Beispiel 6

4-[N-Methyl-N-2-(tetrahydropyranyloxy)ethylamino]benzaldehyd

Analog Beispiel 1 werden 3,58 g (20 mmol)4-(N-Methyl-N-hydroxyethylamino)benzaldehyd mit 0,1 mol Tetrahydropyran und 1 mmol p-Toluolsulfonsäure zum Tetrahydropyranyl-Ether umgesetzt. Das Rohprodukt wird durch Säulenchromatographie [Kieselgel; Dichlormethan/Essigsäureethylester 50:1) gereinigt. Man erhält 4,71 g (90 %) gelbes Öl.
$^1$H-NMR [100-MHz; D-Trichlormethan]: δ [ppm] = 1,27 - 1,93 (m, 6 H); 3,02 (s, 3 H); 3,23 - 3,91 (m, 6 H); 4,48 (m, 1 H); 6,68, 7,63 (AA'XX', 4 H); 9,64 (s, 1 H).

Beispiel 7

4-[N-Methyl-N-2-(tetrahydropyranyloxyethyl)amino]-4'-hexadecylsulfonyl-stilben

Analog Beispiel 5a erhält man aus 3,8 g ( 10 mmol) 5a und 2,62 g ( 10 mmol) der Substanz aus Bsp. 6 nach Säulenchromatographie [Kieselgel; Dichlormethan] 1,15g (18 %) 7 als gelb-braunes Öl.
$^1$H-NMR (300-MHz; D-Trichlormethan): δ [ppm] = 0,87 (t, 3 H); 1,20 - 1,85 (m, 34 H); 3,04 - 3,10 (m, überlagert, 2 H); 3,05 (s, 3 H); 3,43 - 3,66 (m, 4 H); 3,76 - 3,94 (m, 2 H); 4,58 (m, 1 H)

| | |
|---|---|
| CH = CH: | 6,90; 7,18 (AB-Spektrum, $^3J_{AB}$ = 16 Hz) |
| Aromatensignale: | 6,73; 7,41 und 7,59; 7,81 (jeweils AA'XX'). |

Beispiel 8

8a) 4-[N-Methyl-N-2-(hydroxyethyl)amino]-4'-hexadecylsulfonyl-stilben

Gemäß Beispiel 4a erhält man mit der Substanz aus Bsp. 7 nach Spaltung des Tetrahydropyranylethers die Hydroxyverbindung 8a.

Analog werden erhalten:

b) 4-[N-Methyl-N-2-(hydroxyethyl)amino]-4'-dodecylsulfonyl-stilben
c) 4-[N-Methyl-N-2-(hydroxyethyl)amino]-4'-tetradecylsulfonyl-stilben
d) 4-[N-Methyl-N-2-(hydroxyethyl)amino]-4'-octadecylsulfonyl-stilben
e) 4-[N-Methyl-N-2-(hydroxyethyl)amino]-4'-butylsulfonyl-stilben
f) 4-[N-Methyl-N-2-(hydroxyethyl)amino]-4'-hexylsulfonyl-stilben
g) 4-[N-Methyl-N-2-(hydroxyethyl)amino]-4'-octylsulfonyl-stilben
h) 4-[N-Methyl-N-2-(hydroxyethyl)amino]-4'-decylsulfonyl-stilben

Beispiel 9

4-[3-(Tetrahydropyranyloxy)-propoxy]-benzaldehyd

In Anlehnung an Literaturvorschritten setzt man 4-Hydroxybenzaldehyd unter Phasentransferkatalyse (Dichlormethan/Natronlauge/Tetra-n-butylammoniumhydroxid) mit der Bromverbindung 2a um. Nach chromatographischer Reinigung erhält man den Aldehyd als schwach gelbes Öl.

Beispiel 10

4-[3-(Tetrahydropyranyloxy)-propoxy]-4'-hexadecylsulfonyl-stilben

Wie in den Beispielen 7a und b beschrieben erhält man aus der Tolylkomponente 5 und dem Aldehyd 9 nach Säulenchromatographie das Stilben.

Beispiel 11

11a) 4-[3-(Hydroxy-1-propoxy]-4'-hexadecylsulfonyl-stilben

Die Abspaltung des Tetrahydropyranylethers erfolgt wie im Beispiel 4a beschrieben. Man erhält die Hydroxyverbindung.

Analog werden hergestellt:

11b) 4-[3-(Hydroxy-1-propoxy]-4'-decylsulfonyl-stilben

11c) 4-[3-(Hydroxy-1-propoxy]-4'-butylsulfonyl-stilben

11d) 4-[3-(Hydroxy-1-propoxy]-4'-hexylsulfonyl-stilben

11e) 4-[3-(Hydroxy-1-propoxy]-4'-octylsulfonyl-stilben

11f) 4-[3-(Hydroxy-1-propoxy]-4'-octadecylsulfonyl-stilben

11g) 4-[3-(Hydroxy-1-propoxy]-4'-dodecylsulfonyl-stilben

11h) 4-[3-(Hydroxy-1-propoxy]-4'-tetradecylsulfonyl-stilben

Beispiel 12 Ungesättigte Systeme mit Thiophenringen

12a) 1-[(5-Dibutylamino)-thien-2-yl)]-2-[4-[(3-tetrahydropyranyloxy)-1-propylsulfonyl]-phenyl-(E)-ethen

Analog Beispiel 3a werden 5,96 g (20 mmol) 2a mit 5,27 g (22 mmol) 5-Dibutylaminothiophen-2-carbaldehyd umgesetzt. Nach Säulenchromatographie erhält man 3,07 g (32 %) rotoranges Öl.
$^1$H-NMR (300 MHz; D-Trichlormethan) $\delta$ [ppm] = 0,96 (t, 6 H); 1,34 - 1,67 (m, 14 H ); 1,93 - 2,07 (m, 2 H); 3,14 - 3,32 (m, 6 H); 3,40 - 3,50 (m, 2 H); 3,72 - 3,82 (m, 2 H); 4,51 (m, 1 H);
CH = CH: 6,40; 7,23 (AB-Spektrum, $^3J_{AB}$ = 16 Hz)
Aromatensignale: 7,60; 7,83 (AA'XX', Phenyleneinheit) 5,72; 6,84 (jeweils d, je 1 H, Thienyleinheit)

12b) 1-[(5-Dibutylamino)-thien-2-yl)]-2-[4-[(1-hydroxy)-3-propylsulfonyl]-phenyl-(E)-ethen

Analog Beispiel 4c werden 2,0 g (3.85 mmol) der Verbindung aus Bsp. 12a in Tetrahydrofuran mit 2 M Salzsäure zum Sieden erhitzt. Man erhält nach Chromatographie 1,12 g ( 64 %) rotoranges Pulver.
$^1$H-NMR (300-MHz; D-Trichlormethan) $\delta$ [ppm] = 0,96 (t, 6 H); 1,38 (m, 4 H); 1,66 (m, 4 H); 1,71 (s, br, 1 H); 1,94 - 2,06 (m, 2 H); 3,16 - 3,34 (m, 6 H); 3,71 - 3,80 (m, 2 H);
CH = CH: 6,39; 7,25 (AB-Spektrum, $^3J_{AB}$ = 16 Hz)
Aromatensignale: 7,59; 7,82 (AA'XX', Phenyleneinheit) 5,70; 6,85 (jeweils d, je 1 H, Thienyleinheit)
Polymeranaloge Umsetzung von Sulfonyl-dialkylaminostilbenen

Beispiel 13 Methacrylate und Acrylate

13a) 4-Dimethylamino-4'-[3-methacroyloxy)-1-propylsulfonyl]-stilben

Unter Stickstoffatmosphäre werden 1,46 ml (15 mmol) Methacrylsäurechlorid und 10 ml trockenem Dioxan vorgelegt. Nach Zugabe von 61 mg (0.5 mmol) N,N-Dimethylaminopyridin tropft man bei Raumtemperatur innerhalb von 1,5 h eine Lösung von 1,06 g (3.07 mmol) der Verbindung 4a in 20 ml Pyridin zu und rührt die Reaktionsmischung noch 20 h bei Raumtemperatur. Dann gibt man die komplette Suspension auf eine Kieselgelsäule und eluiert mit Dichlormethan/Essigestersäureethylester (1:1). Das nach dem Abdestillieren des Lösungsmittels i. Vak. erhaltene gelbe Öl wird durch Chromatographie gereinigt [Kieselgel; Dichlormethan/Essigsäureethylester (1:1)]. Man erhält 620 mg (52 %) gelben Feststoff, der unter Stickstoff im Kühlschrank gelagert wird.
$^1$H-NMR (100 MHz; $CDCl_3$): δ [ppm] = 1,90 (m, 3H); 2,00 - 2,33 (m, 2 H); 3,00 (s, 6H); 3,08 - 3,30 (m, 2H); 4,20 (t, 2H); 5,55 (m, 1H); 6,05 (m, 1H);

CH = CH (Stilben): 6,88; 7,20 (AB-Spektrum, $^3J_{AB}$ = 16,3 Hz)
Aromatensignale: 6,70; 7,43 und 7,58, 7,81 (jeweils AA'XX').

13b) 4-Octadecyloxy-4'-[3-methacroyloxy)-1-propylsulfonyl]-stilben

Aus Methacrylsäurechlorid und 4-Octadecyloxy-4'-[(hydroxy)-1-propylsulfonyl]-stilben erhält man durch Umsetzung in Dichlormethan in Gegenwart von Pyridin den Methacrylsäureester, der chromatographisch gereinigt wird.
$^1$H-NMR (300 MHz, D-Trichlormethan): δ [ppm] = 0,88 (t, 3H); 1,24-1,50 (m, 30 H); 1,74-1,84 (m, 2H); 1,91 (m, 3H); 2,07-2,18 (m, 2H); 3,16-3,24 (m, 2H); 3,986 (t, 2H); 4,208 (t, 2H); 5,566 (m, 1H); 6,060 (m, 1H);

CH = CH (Stilben): 6,982; 7,205 AB-Spektrum, $^3J_{AB}$ = 16 Hz)
Aromatensignale: 6,914; 7,470 und 7,638, 7,860 (jeweils AA'XX').

13c) 4-Octadecyloxy-4'-[(3-acroyloxy)-1-propylsulfonyl]-stilben

Analog erhält man mit Acrylsäurechlorid das entsprechende Acrylat.
$^1$H-NMR (300 MHz; D-Trichlormethan): δ [ppm] = 0,88 (t, 3H); 1,24-1,50 (m, 30 H); 1,74-1,85 (m, 2H); 2,07-2,18 (m, 2H); 3,16-3,24 (m, 2H); 3,98 (t, 2H); 4,2224 (t, 2H); 5,84 (dd, 1H, $^3$J = 10,5 Hz, $^2$J = 1,5 Hz); 6,08 (dd, 1H, $^3$J = 17 Hz, $^3$J = 10,5 Hz); 6,388 (dd, 1H, $^3$J = 17 Hz, $^2$J = 1,5 Hz);

CH = CH (Stilben): 6,985; 7,204 (AB-Spektrum, $^3J_{AB}$ = 16 Hz)
Aromatensignale: 6,913; 7,472 und 7,648; 7,862 (jeweils AA'XX').

13d) 4-Octadecyloxy-4'[(1-methacrylsäure)-3-propyl-sulfonyl]stilben

1 g (1,75 mmol) 4-Octadecyloxy-4'[(1-hydroxy)-3-propyl-sulfonyl]stilben werden zusammen mit einem kleinen Kristall 2,6-Di-tert.-butyl-p-kresol (Inhibitor) unter Stickstoff gelöst und auf 0 °C gekühlt. Hierzu wird langsam unter Stickstoff 0,366 g (3.5 mmol) Methacrylsäurechlorid in 5 ml Chloroform und 277 mg Pyridin in 10 ml Chloroform zugetropft. Nach 1 h bei 0 °C wird die Suspension auf 50 °C erhitzt. Nach weiteren 3 h bei 50 °C ist die Reaktion beendet. Die klare Lösung wird am Rotationsverdampfer eingeengt, das ausgefallene Reaktionsprodukt in 10 ml Dichlormethan aufgenommen, mit Wasser ausgeschüttet und über eine Kieselgelsäule gereinigt.

Ausbeute: 0,67 g (60 %)

Beispiel 14 (Polymer I)

In einem 250 ml Rundkolben mit Stickstoffüberlagerung werden 1,36 g (2,5 mmol) 4-[N-Methyl-N-2-(hydroxyethyl)amino]-4'-hexadecylsulfonylstilben 8a eingewogen. Hierzu gibt man 6,15 g einer 18 gew.-%igen Polyacrylsäurechlorid [$M_w$ 20 000 - 30 000]-Lösung in Dioxan und 50 ml trockenes N-Methyl-2-pyrrolidon (NMP). Nach 10-minütigen Rühren bei Raumtemp. wird die klare gelbe Lösung mit 2,5 ml trockenem Pyridin versetzt und 8 h bei 50 °C gerührt. Zu der abgekühlten Lösung wird nach 16 h 3,365 g Octadecylamin zugegeben und wieder 8 h bei 50 °C gerührt. Zum Abschluß wird mit 50 ml Methanol versetzt und nach weiteren 10 h bei 50 °C die Lösung in Aceton gefällt. Das ausgefallene gelbe Polymer wird zur Reinigung in einer Mischung aus Dichlormethan/Methanol gelöst und wieder in Aceton gefällt. Die Bestimmung der Einbaurate des Farbstoffs ergibt 32 Gew.-%.

Beispiel 15 (Polymer II)

Analog obigem Beispiel erhält man unter Verwendung von 1,92 g (2,5 mmol) 4-(Bishexadecyl)amino-4'-[(1-hydroxy)3-propylsulfonyl]stilben (4d) ein gelbes Polymer mit einer Chromophoreinbaurate von 33 Gew.-%.

Beispiel 16

Copolymerisation von 4-Octadecyloxy-4'[(1-methacrylsäure)-3-propylsulfonyl]stilben mit HEMA (1:1) (Polymer III)

290,7 mg (13d) (0,46 mmol) und 59,2 mg 2-Hydroxyethylmethacrylat werden mit 1,5 ml Chlorbenzol in einem Schlenkgefäß gelöst. Hierzu werden 2,2 mg in 0,65 ml Chlorbenzol gelöstes Azoisobutyronitril (AIBN) gegeben und mit 1 ml Chlorbenzol nachgespült. Anschließend wird das Schlenkgefäß fest verschlossen und durch 3malige Beaufschlagung mit Vakuum und jeweils anschließend Stickstoff vom Luftsauerstoff befreit. Die Reaktionslösung wird nach 24 h bei 65 °C mit 2 ml Dichlormethan und 0,5 ml Methanol verdünnt und in 100 ml Ethylacetat gefällt. Das ausgefallen Produkt wird durch DC-Kontrolle auf seine Monomerfreiheit überprüft und evtl. nochmals umgefällt.

Ausbeute: 273,8 mg (78,3 %)

Farbstoffeinbaurate: 70 Gew.-% (Durch UV/Vis-Spektroskopie)

In analoger Weise können auch weitere Copolymere mit Methylmethacrylat, Methylacrylat, Hydroxyethylacrylat, Ethyl-, Propyl- und Butylmethacrylat und -acrylat usw. mit guten Ausbeuten und hohen Farbstoffgehalten hergestellt werden.

Beispiel 17 (SHG an Farbstoffmonoschichten)

Zuerst wurde die SHG-Intensität der Farbstoffmonolagen mit der Maker Fringe Apparatur bestimmt.

Hierzu wurden mit einem LB Trog der Fa. Lauda je vier hydrophile Glassubtrate mit Farbstoffmonoschichten aus I und II beschichtet. Die Beschichtungsbedingungen für die Polymere I und II wurden wie folgt gewählt:

Wassertemperatur: 20 °C, Filmschub: 15 mN/m,

Beschichtungsgeschwindigkeit: 30 mm/min.

Die so hergestellten Proben wurden mit der Maker Fringe Apparatur hinsichtlich der SHG-Eigenschaften untersucht. Alle Proben der gleichen Substanz zeigten ungefähr gleich große SHG-Intensitäten. Wie erwartet, sind auch die SHG Intensitäten der Monoschichten aus I und II von der gleichen Größenordnung, da bei beiden Polymeren der gleiche Chromophor eingesetzt wird.

Die Abhängigkeit der SHG-Intensität vom Einfallswinkel war bei allen Proben aus I und II gleich. Die Meßkurven sind symmetrisch bezogen auf 0 ° Einfallswinkel. Das bestätigt die oben diskutierte Orientierung der Chromophore in der Farbstoffmonoschicht.

Die Auswertung der Meßkurven ergab die folgenden $X^{(2)}$-Werte für die Monoschichten: $X^{(2)}$(I) = 8 pm/V; $X^{(2)}$(II) = 9 pm/V.

Beispiel 16: (SHG an alternierenden Multischichten mit den Polymeren I und II)

Für die SHG-Messungen an alternierenden Multischichten aus I und II wurden am AB-Trog Proben mit jeweils 10, 20, 30, 50 und 200 Schichtzyklen aus hydrophobem Glas hergestellt. Die Schichten wurden unter den gleichen Bedingungen wie die Monoschichten (vgl. Beispiel 15) präpariert. Das Übertragungsverhältnis von I und II war unabhängig von der Schichtanzahl und betrug ca. 1. Die alternierende Beschichtung führte zu homogenen Schichten mit guter optischer Qualität.

Die so hergestellten alternierenden Multischichten wurden mit der Maker Fringe Apparatur hinsichtlich der SHG-Eigenschaften charakterisiert. Die SHG-Intensität steigt quadratisch mit der Schichtanzahl, was zu erwarten ist, wenn die Chromophororientierung im Multischichtsystem erhalten bleibt. Die winkelabhängigen SHG-Intensitäten sind wie bei den Monoschichten symmetrisch bezogen auf senkrechten Lasereinfall. Aus den Meßkurven wurde der folgende $X^{(2)}$-Wert für das alternierende Schichtsysteme bestimmt: $X^{(2)}$(I/II) = 8 pm/V. Die Übereinstimmung von $X^{(2)}$ für unterschiedlich dicke Proben des gleichen alternierenden Schichtsystems ist sehr gut.

Die durchgeführten Untersuchungen zeigen, daß die SHG Aktivität und somit die Orientierung der Chromophore in der alternierenden Multischicht erhalten bleibt.

Beispiel 17 (Lichtdämpfung von 200 Zyklen I/II)

Die Charakterisierung der wellenleitenden Schicht (200 AB Zyklen) hinsichtlich der optischen Dämpfung wurde nach der in (W. Hickel et. al. Thin Solid Films 210/211 (1992) 182-184) beschriebenen faseroptischen Methode bei 633 nm bestimmt. Die Dämpfung beträgt ca. 2.5 dB/cm. Für eine Schicht, bei der mehr als 80 % des elektrischen Feldes in der wellenleitenden Schicht geführt wird, ist dies ein sehr guter Wert.

**Patentansprüche**

1. Optisches Bauelement, enthaltend ein für elektromagnetische Strahlung durchlässiges polymeres Medium mit einer Suszeptibilität zweiter Ordnung von mindestens $10^{-9}$ elektrostatischen Einheiten, wobei dieses polymere Medium Verbindungen mit polar ausgerichteten, nichtzentrosymmetrischen molekularen Dipolen enthält, die als Strukturelement einen Elektronenakzeptor aufweisen, der über ein konjugiertes $\pi$-Elektronensystem an einen Elektronendonor gebunden ist, wodurch eine Oszillation des molaren Dipols zwischen einem Grundzustand mit einem ersten Dipolmoment und einem elektronisch angeregten Zustand mit einem zweiten, vom ersten verschiedenen Dipolmoment, möglich ist, dadurch gekennzeichnet, daß das polymere Medium alternierend aus mindestens je einem Langmuir-Blodgett-Film mindestens zweier unterschiedlicher, nicht ionischer, nichtlineare optische Eigenschaften aufweisender Polymere besteht.

2. Optisches Bauelement nach Anspruch 1, dadurch gekennzeichnet, daß als polymere Verbindungen solche der Formel III eingesetzt werden,

$$[[CH_2\text{-}CZ^1\text{-}COW]_k\ [CH_2\text{-}CZ^2\text{-}COOV]_l\ [CH_2\text{-}CZ^3\text{-}COOU]_t] \qquad III$$

worin bedeuten:

| | |
|---|---|
| $Z^1$, $Z^2$, $Z^3$: | unabhängig voneinander H, $CH_3$, $CF_3$, F, Cl, |
| V : | H oder eine Alkylgruppe mit 1 bis 6 C-Atomen, |
| U : | eine Gruppe Q-D-G-A (Formel IIIa) bzw. Q-A-G-D (Formel IIIb), |
| W: | $NR^{12}R^{13}$, $OR^{12}$, wobei $R^{12}$, $R^{13}$ für H oder eine Alkylgruppe mit 1 bis 22 C-Atomen steht, |
| t: | 0,01 - 1,0, |
| l: | 0 - 0,5, |
| k: | 0 - 0,99, |
| Q : | $-(CH_2)_p-X$ mit X: -O-, $-NR^1-$, wobei X die Verbindung zur Hauptkette des Polymers angibt. p: 1 bis 20, wobei auch eine oder zwei $CH_2$-Gruppen durch 0 ersetzt sein konnen, |
| D: | $-NR^2R^3$, $-O-R^4$, $-S-R^5$, wobei bei Verbindungen der Formel IIIa ein Rest R durch Q ersetzt ist, |
| A: | $-SO_2-R^6$, $-BR^9R^{10}$, 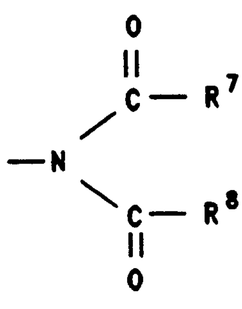 wobei bei Verbindungen der Formel IIIb ein Rest R durch Q ersetzt ist; |
| G: | $-Ar - Y_{(n)} - Ar_{(m)}$ mit Ar: 1,4 Phenylen, Naphtalin-2,6-diyl, Thiazol-2,5-diyl, Thiadiazol-2,5-diyl, Thiophen-2,5-diyl, Furan-2,5-diyl, Oxazol-2,5- |

| | |
|---|---|
| | diyl, wobei jeweils ein oder zwei H-Atome durch $C_1$-$C_4$ Alkyl- oder Alkoxygruppen ersetzt sein können, |
| Y: | -C ≡ C, -CH = CH-, -N = N-, -CH = N-, -N = CH-, -NH-N = CH, -HC = N-NH-, n, m; 0, 1,2, 3; |
| $R^1$,$R^2$,$R^3$, $R^4$,$R^5$,$R^6$,$R^7$, $R^8$,$R^9$,$R^{10}$ | unabhängig voneinander eine geradkettige oder verzweigte Alkylgruppe mit 1 bis 22 Kohlenstoffatomen, wobei auch eine oder mehrere nicht benachbarte $CH_2$-Gruppen durch O ersetzt sein können, wodurch sich Etherstrukturen ergeben, und wobei $R^7$ und $R^8$ zusammen auch einen Ring bilden können, D und G können auch Teile eines Ringsystems sein, wodurch einer der Substituenten R eine Einfachbindung sein kann. |

**3.** Verfahren zur Darstellung eines optischen Bauelements nach Anspruch 1, dadurch gekennzeichnet, daß mit Hilfe der Langmuir-Blodgett-Technik abwechselnd Filme von Polymeren der Formel IIIa und IIIb (in Anspruch 2) auf ein Substrat aufgezogen werden.

**4.** Verwendung eines optischen Bauelements nach Anspruch 1 als elektrooptischer Schalter.

**5.** Verwendung eines optischen Bauelements nach Anspruch 1 als Frequenzverdoppler.

**6.** Verfahren zur Darstellung von Verbindungen der Formel Ia und IIa

$Q - D - Ar - CH = CH - Ar - SO_2 - R^6$ Ia

$D - Ar - CH = CH - Ar - SO_2 - Q$ IIa

in der die Symbole die in Formel III genannten Bedeutungen haben, dadurch gekennzeichnet, daß eine Verbindung der Formel IVa bzw. IVb,

$H_3C - Ar - SO_2 - Q$ IVa

$H_3C - Ar - SO_2 - R^6$ IVb

wobei die Symbole die in III angegebenen Bedeutungen haben - und wobei eine freie OH oder NHR-Gruppe mit einer Schutzgruppe versehen sein kann - mit einem Aldehyd der Formel Va bzw. Vb,

D - Ar - CHO Va
Q - D - Ar - CHO Vb

worin die Symbole die unter Formel III genannten Bedeutungen haben, in einem polar aprotischen Lösungsmittel in Gegenwart eines Gemisches aus einer starken Base und der dazu korrespondierenden schwachen Säure in einem Verhältnis zwischen 4:1 und 1:1 innerhalb von 10 min bis 3 d bei einer Temperatur von 20 °C bis 160 °C umgesetzt wird und anschließend gegebenenfalls die Schutzgruppe abgespalten wird.

Fig. 1

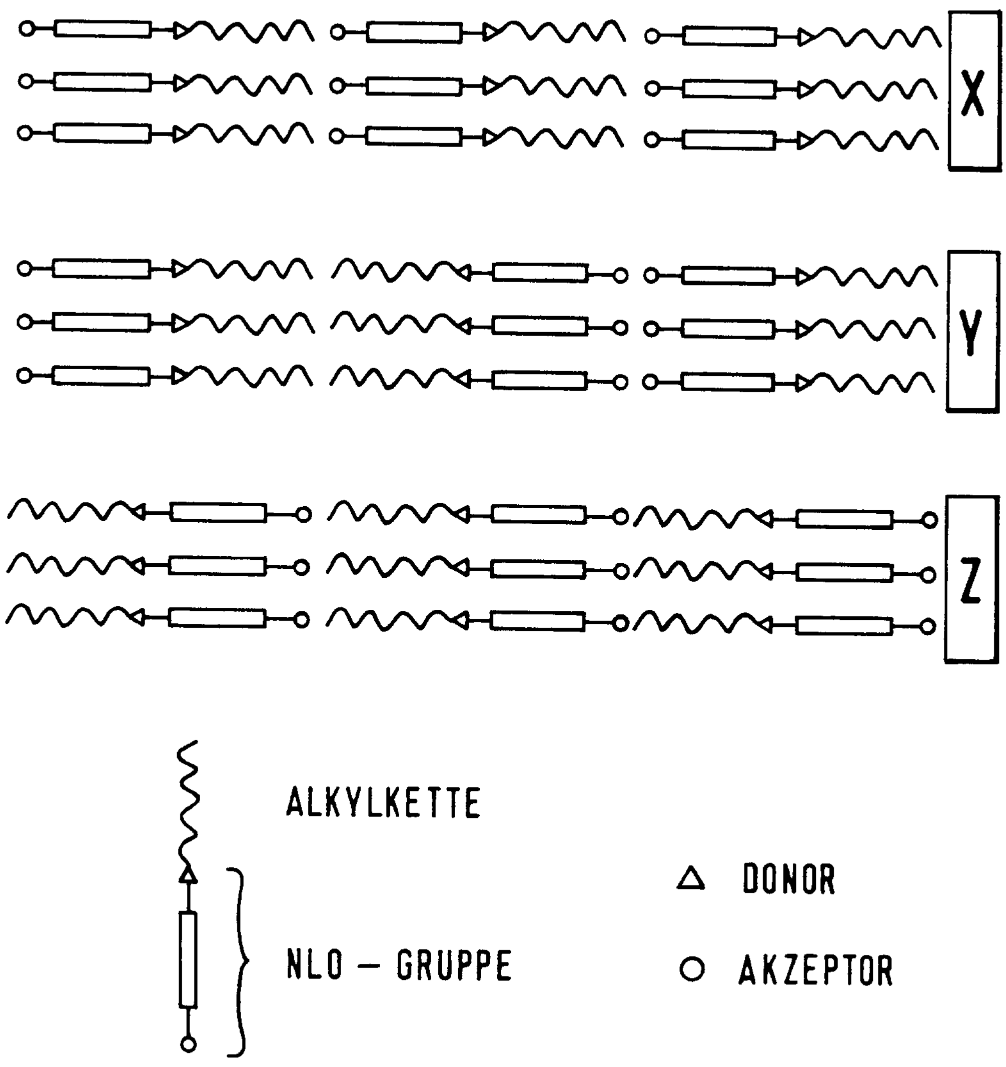

Fig. 2

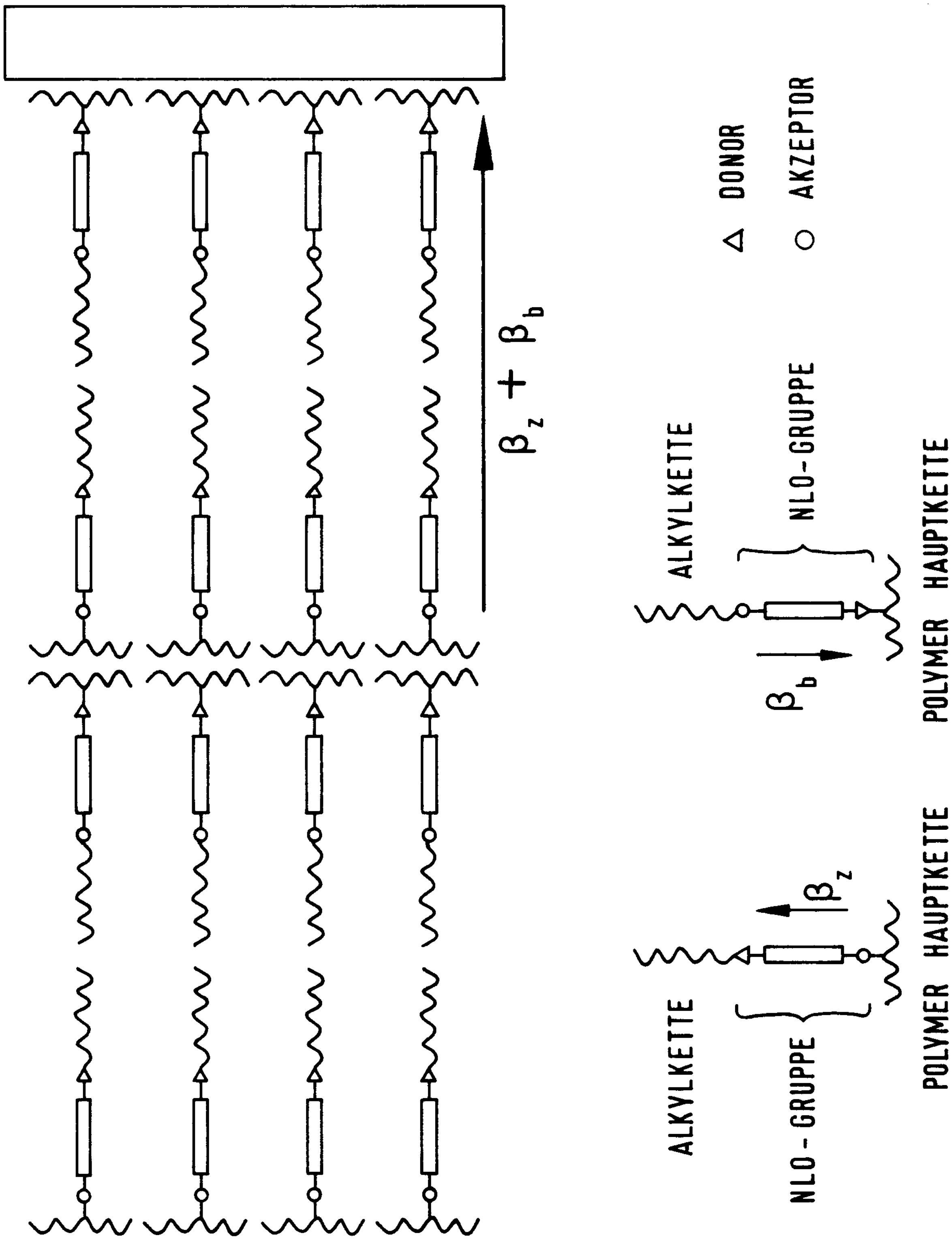

βz + βb
DONOR
AKZEPTOR
ALKYLKETTE
NLO-GRUPPE
βb
POLYMER HAUPTKETTE
βz
ALKYLKETTE
NLO-GRUPPE
POLYMER HAUPTKETTE

Fig. 3

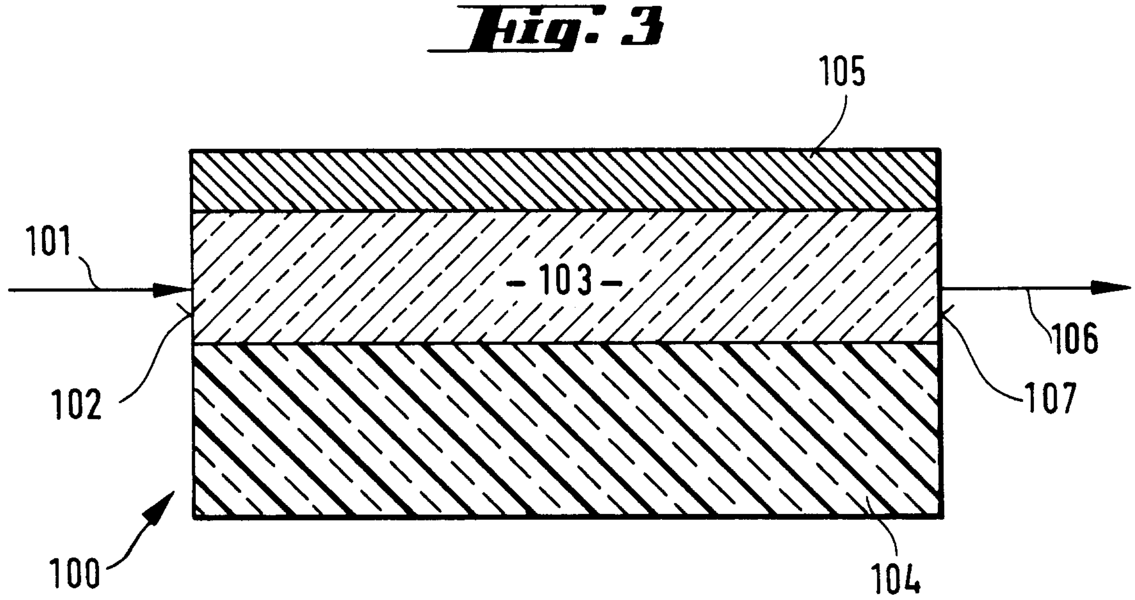


Fig. 4

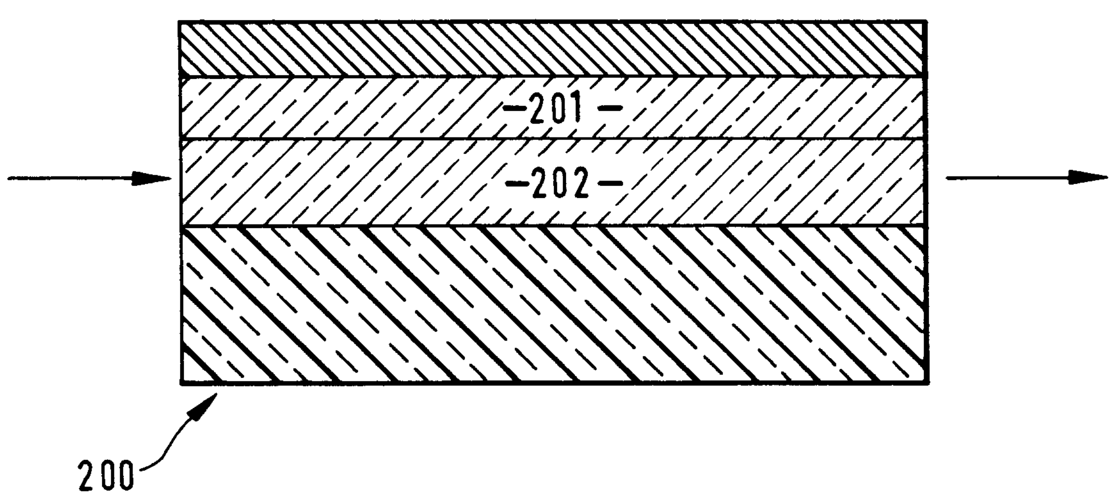

Fig. 5

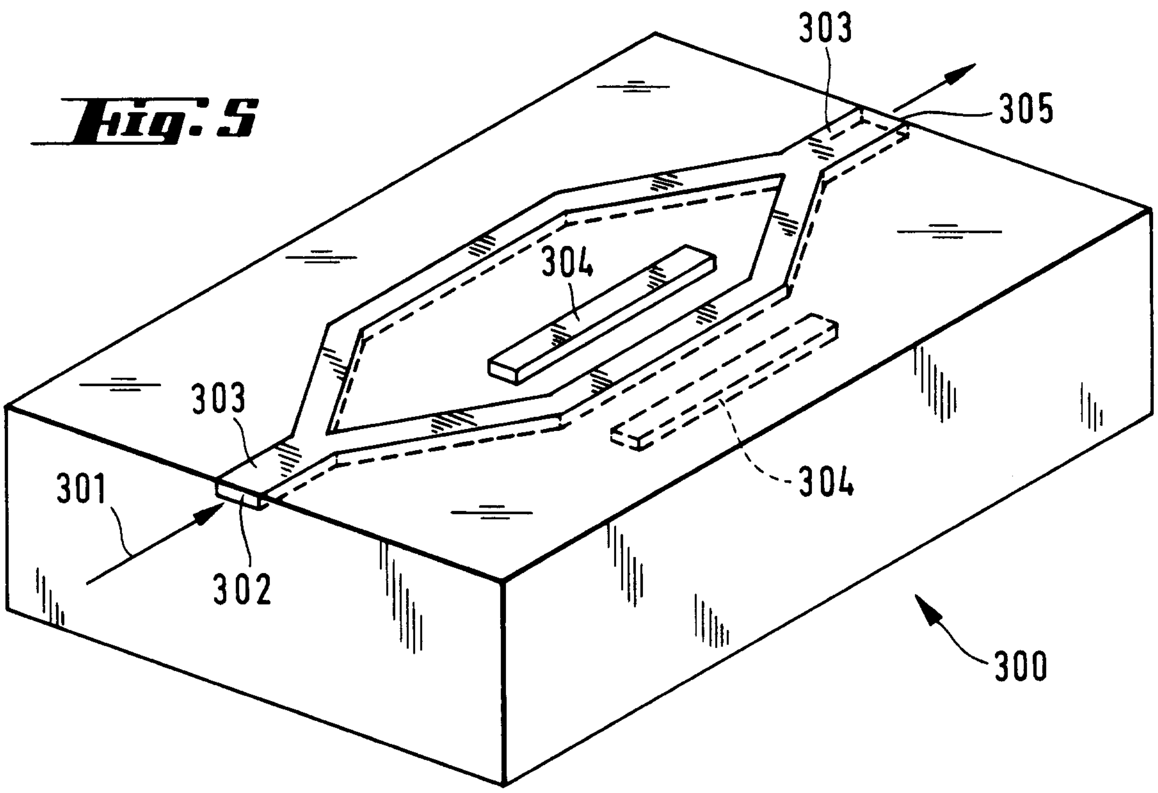


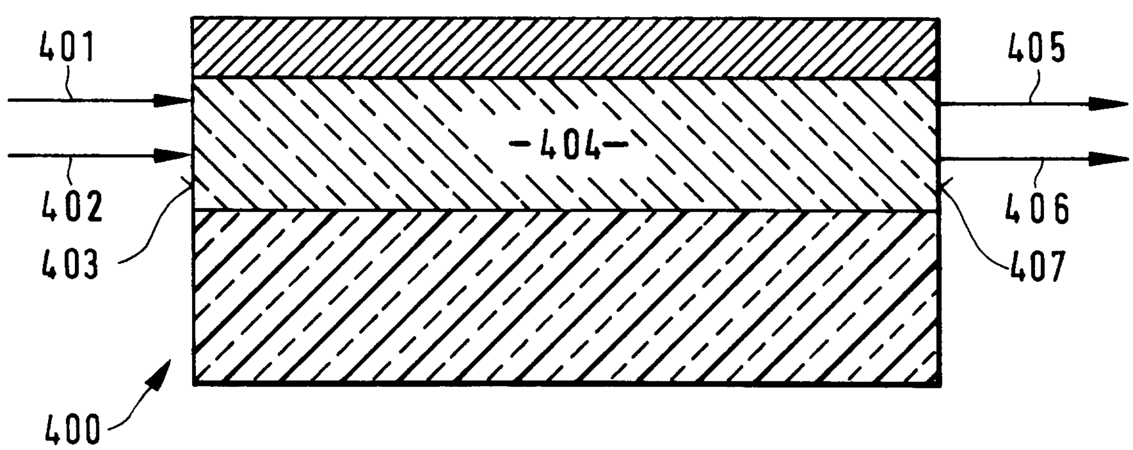


Fig. 6

Europäisches Patentamt

# EUROPÄISCHER RECHERCHENBERICHT

Nummer der Anmeldung
EP 93 11 6954

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| P,X<br>Y | EP-A-0 533 136 (EASTMAN KODAK)<br>* Seite 4, Zeile 23 - Zeile 42 *<br>* Seite 24, Zeile 4 - Zeile 35 *<br>* Seite 32, Zeile 15 - Zeile 58 * | 1,4,5<br>2,3 | G02F1/35 |
| P,X<br>Y | EP-A-0 525 665 (EASTMAN KODAK)<br>* Seite 3, Zeile 33 - Zeile 49 *<br>* Seite 7, Zeile 37 - Seite 9, Zeile 14 *<br>* Seite 20, Zeile 32 - Zeile 54 *<br>* Ansprüche 1-7 * | 1,4,5<br>2,3 | |
| Y | WO-A-92 10781 (E.I. DU PONT DE NEMOURS)<br>* Seite 4, Zeile 20 - Seite 7, Zeile 5 *<br>* Seite 13, Zeile 19 - Seite 16, Zeile 23 *<br>* Ansprüche 1-34 * | 1-3 | |
| Y,D<br>X | EP-A-0 313 474 (EASTMAN KODAK COMPANY)<br>* Beispiele 10,15,24 *<br>* Seite 3, Zeile 46 - Seite 4, Zeile 6 *<br>* Seite 19, Zeile 17 - Zeile 22 *<br>* Seite 21, Zeile 44 - Zeile 56 * | 1-3<br>6 | RECHERCHIERTE SACHGEBIETE (Int.Cl.5)<br>G02F |

Der vorliegende Recherchenbericht wurde für alle Patentansprüche erstellt

| Recherchenort | Abschlußdatum der Recherche | Prüfer |
|---|---|---|
| DEN HAAG | 4. Februar 1994 | Boulon, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)